(19) Europäisches Patentamt
European Patent Office
Office européen des brevets

(11) **EP 3 596 623 B1**

(12) **EUROPEAN PATENT SPECIFICATION**

(45) Date of publication and mention
of the grant of the patent:
**18.10.2023 Bulletin 2023/42**

(21) Application number: **18768309.9**

(22) Date of filing: **19.03.2018**

(51) International Patent Classification (IPC):
**G06F 3/16** *(2006.01)*      **G06F 9/455** *(2018.01)*
**G06F 11/36** *(2006.01)*

(52) Cooperative Patent Classification (CPC):
**G06F 9/45512; G06F 3/167;** G06F 11/3684;
G06F 11/3688; G06F 11/3696

(86) International application number:
**PCT/SG2018/050120**

(87) International publication number:
**WO 2018/169493 (20.09.2018 Gazette 2018/38)**

(54) **SYSTEMS, METHODS AND COMPUTER READABLE MEDIA FOR AMBIGUITY RESOLUTION IN INSTRUCTION STATEMENT INTERPRETATION**

SYSTEME, VERFAHREN UND COMPUTERLESBARE MEDIEN ZUR MEHRDEUTIGKEITSAUFLÖSUNG IN BEFEHLSAUSSAGEINTERPRETATION

SYSTÈMES, PROCÉDÉS ET SUPPORTS LISIBLES PAR ORDINATEUR POUR UNE RÉSOLUTION D'AMBIGUÏTÉ DANS UNE INTERPRÉTATION D'ÉNONCÉ D'INSTRUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2017 SG 10201702206S**

(43) Date of publication of application:
**22.01.2020 Bulletin 2020/04**

(73) Proprietor: **Uilicious Private Limited**
**Singapore 408730 (SG)**

(72) Inventors:
• **TAI, Shi Ling**
**Singapore 408730 (SG)**
• **CHEAH, Hui Qin Eugene**
**Singapore 650222 (SG)**

(74) Representative: **Mewburn Ellis LLP**
**Aurora Building**
**Counterslip**
**Bristol BS1 6BX (GB)**

(56) References cited:
CN-A- 101 840 397      US-A- 5 870 701
US-A1- 2007 038 436      US-A1- 2012 265 528
US-A1- 2012 265 528      US-A1- 2013 227 351
US-A1- 2013 262 076      US-A1- 2015 269 937
US-A1- 2015 331 850

• SURESH THUMMALAPENTA ET AL: "Automating test automation", 2012 34TH INTERNATIONAL CONFERENCE ON SOFTWARE ENGINEERING (ICSE), 2 June 2012 (2012-06-02), - 9 June 2012 (2012-06-09), pages 881-891, XP055547444, DOI: 10.1109/ICSE.2012.6227131 ISBN: 978-1-4673-1067-3
• THUMMALAPENTA S.: "Automating test automation", 34th International conference on software Engineering, 9 June 2012 (2012-06-09), pages 881-891, XP055547444, [retrieved on 2018-05-17]

**Description**

**PRIORITY CLAIM**

The present application claims priority to Singapore patent application number 10201702206S filed on 17 March 2017.

**FIELD OF INVENTION**

The following disclosure relates to systems, methods and computer readable media for ambiguity resolution in instruction statement interpretation.

**BACKGROUND**

Typically, before a website, a software application, a mobile application, or the like is launched to market, usability of user interfaces of these infocommunication products is tested. To conduct such a test, test script is developed, which usually is an instruction set including one or more instruction statements to be executed by a computer implemented system, to test whether the user interface functions as expected.

There are various means for writing and/or executing test scripts. One way to do it is to use macro recording. However, macro recording, which records screen coordinates and/or programming identifiers of interactions with the user interface, may fail when recording a test of interaction with a user interface for one screen size, and running the tested user interface for another screen size. As a result, to test one user interface, macro recording has to be repeated manually for various screen sizes, which limits the automation for testing. In addition, the macro recording cannot be easily modified for changes subsequently, when required, due to changes in any part of the user interface.

Another way is to use website testing tools built on Selenium, which typically uses respective programming identifiers for each element that may appear in the user interface. However, to utilise these website testing tools that use programming identifiers, the test script needs to be written in professional programming which increase the difficulty of writing a test script by an average user, and may cause cost concerns should professional programmers be used.

One possible approach to solve the above concerns is keyword driven user interface testing. Keyword driven user interface testing allows users to perform user interaction processes based on what they see on screen, instead of based on non-visible programming identifiers as conventionally used, which in turn allows for test scripts/instruction sets to be easily validated, and maintained by non-programmers. In the keyword driven user interface testing, an instruction set can be generated by a user through any means using vague terms similar to English, instead of programming languages. For example, the user may speak out the instruction set to a voice recognition input device of the system, or use mouse, keyboard, touch screen, or any form of textual input device to type out the instruction set.

An instruction set generated in the above manners may comprise one or more instruction statements. However, the instruction statements are formed of keywords which are not definitive and each of which may corresponds to multiple elements on a user interface subject to testing. The closer the format of the instruction statements is to a natural spoken language, an increase in complexity and the likelihood of ambiguity occurs in instruction statement interpretation.

Since computer instruction statement needs to be free of ambiguity, conventional methods to avoid the above issue of ambiguity is to force resolution by either throwing an exception until a specific programmer identifier is used for the instruction statement having ambiguity in instruction statement interpretation, or using only the first occurrence of the interpretation of the instruction statement.

There is thus a need for a technical solution to provide systems, methods and computer readable media to address the above shortcomings, so as to resolve ambiguity in instruction statement interpretations. Furthermore, other desirable features and characteristics will become apparent from the subsequent detailed description and the appended claims, taken in conjunction with the accompanying drawings and this background of the disclosure.

US 2013/0227351 A1 to Lau et al. discloses semi-automatic conversion and execution of functional manual tests.

**SUMMARY**

The present invention is set out in the attached independent claims. Preferred features are set out in the dependent claims.

According to a first aspect of the present invention, there is provided a method for ambiguity resolution in instruction statement interpretation. The method comprises resolving ambiguity in interpreting an instruction statement of an instruction set based on one or more criteria.

According to a second aspect of the present invention, there is provided a system for ambiguity resolution in instruction statement interpretation. The system comprises at least one processor; and at least one memory including computer program code. The at least one memory and the computer program code are configured to, with the at least one processor, cause the system at least to: resolve ambiguity in interpreting an instruction statement of an instruction set based on one or more criteria.

According to a third aspect of the present invention, there is provided a computer readable medium comprising instructions which, when executed by a processor, make the processor perform a method for ambiguity resolution in instruction statement interpretation as described herein.

**BRIEF DESCRIPTION OF THE DRAWINGS**

Embodiments of the invention will be better understood and readily apparent to one of ordinary skilled in the art from the following written description, by way of example only, and in conjunction with the drawings, in which:

Fig. 1 shows a flowchart depicting an embodiment of a method 100 for ambiguity resolution in instruction statement interpretation.

Fig. 2 shows a diagram illustrating an embodiment 200 of the present application, in which ambiguity in interpreting an instruction statement of an instruction set is resolved based on proximity to one or more selected interpretations of one or more previous instruction statements in the instruction set.

Fig. 3 shows a diagram illustrating an embodiment 300 of the present application, in which ambiguity in interpreting an instruction statement of an instruction set is resolved based on validity of each interpretation of the instruction statement.

Fig. 4 shows a diagram illustrating an embodiment 400 of the present application, in which ambiguity in interpreting an instruction statement of an instruction set is resolved based on validity of keyword, phrase or their variants of the instruction statement.

Fig. 5 shows a diagram illustrating an embodiment 500 of the present application, in which ambiguity in interpreting an instruction statement of an instruction set is resolved based on validity of a context of the instruction statement.

Fig. 6 shows a diagram illustrating an embodiment 600 of the present application, in which ambiguity in interpreting an instruction statement of an instruction set is resolved based on proximity to one or more related elements.

Fig. 7 shows a diagram illustrating an embodiment 700 of the present application, in which ambiguity in interpreting an instruction statement of an instruction set is resolved based on similarity and/or proximity to a provided image.

Fig. 8 shows a diagram illustrating an embodiment 800 of the present application, in which ambiguity in interpreting an instruction statement of an instruction set is resolved based on a combination of any of the above depicted criteria. In the embodiment 800, the ambiguity is resolved based on a combination of proximity to one or more related elements and proximity to previously selected interpretation(s) of the instruction statement.

Fig. 9 shows a flowchart of an embodiment 900 of scoring of instruction statement interpretation, in which each possible interpretation of an instruction statement is scored.

Fig. 10 shows an exemplary computing device 1000 to realize a system for facilitating ambiguity resolution in instruction statement interpretation in accordance with the embodiments shown in Figs. 1 to 9.

**DETAILED DESCRIPTION**

Terms Description (in Addition to Plain and Dictionary Meaning of Terms)

In the present disclosure, the term "user" refers to a person who uses or operates a computer system, either directly through an instruction set, or indirectly through a program.
In the present disclosure, the term "user interface" refers to the means by which the user and the computer system interact, in particular involving the use of input devices and software.
In the present disclosure, the term "script" refers to "an instruction set", which is a set of instruction statement to be handled by the system. The instruction set may include one or more instruction statement.
In the present disclosure, the term "keywords" refers to words, phrases, symbols, or their variants recited in an instruction statement. The text of a keyword may be recited exactly or partially in one or more elements on a user interface. Each exactly or partially matched element may be considered as a possible interpretation of the instruction statement. However, the instruction statement may require interaction with only one element on the user interface. When running each instruction statement within an instruction set, a scan of the entire user interface is performed based on keyword search to identify the element to execute the instruction. When more than one element can be found, the instruction statement is considered to have multiple possible interpretations. Ambiguity in instruction statement interpretation thus occurs, which requires ambiguity resolution as provided in the present application to select an interpretation among all the possible interpretations of the instruction statement.

In the present disclosure, the term "instruction statement interpretation" refers to a process of interpreting an instruction statement. There may be several possible interpretations for the same instruction statement.

In the present disclosure, the term "ambiguity" refers to a situation where a single instruction statement has multiple possible interpretations.

In the present disclosure, the term "ambiguity resolution" refers to a process or a method in which the above mentioned ambiguity in instruction statement interpretation is resolved. In the present application, the ambiguity resolution may be implemented automatically by the system, either through a plug-in application or directly integrated into a main program that runs the testing.

Alternatively, in the present application, the ambiguity resolution may be implemented manually by the user. In manual implementation, when ambiguity occurs in interpreting an instruction statement, the system may display all the possible interpretations of the instruction statement on screen for the user to select an interpretation among the multiple possible interpretations of the instruction statement. Optionally, once selection is done, the system may prompt a dialog window or a notification message to the screen for the user to confirm the selection. In this manner, the ambiguity is resolved by the user. Based on practical needs, the instruction statement may be executed as soon as the ambiguity is resolved, or after all the instruction statements in an instruction set or in all the instruction sets are received and interpreted with ambiguity resolved, where necessary.

In addition, in the present application, the ambiguity resolution may be implemented by using a machine learning algorithm. By training the algorithm against any datasets generated by the ambiguity resolution methods and systems described herein, the machine learning algorithm or dataset can be used as a part of a larger machine learning algorithm or dataset. Any machine learning algorithm trained against a dataset built using the ambiguity resolution methods described herein is an implementation of the present ambiguity resolution methods and systems.

In the present application, the ambiguity resolution may be performed individually for each instruction statement that has ambiguity in instruction statement interpretation. Alternatively, the ambiguity resolution may be performed collectively for all instruction statements that have ambiguity in instruction statement interpretation, prior to execution of all the instruction statements. For example, a user may initiate the ambiguity resolution for all the instruction statements when prompted by a system notification prior to execution of the all the instruction statements.

In the present disclosure, the term "ambiguity resolution engine" may be interchangeably referred to as "system for ambiguity resolution in instruction statement interpretation", which refers to an implementation of the process/method in which the ambiguity resolution in instruction statement interpretation of instruction statements is performed. The ambiguity resolution engine may be implemented along with any other functionality required by the computer implemented system to facilitate the process of ambiguity resolution.

In the present application, if more than one instruction statement in an instruction set require ambiguity resolution, the methods for ambiguity resolution in instruction statement interpretation of an instruction statement as described herein can be repeatedly implemented for all the instruction statements that require ambiguity resolution, either automatically by the system, or manually by the user, or by a mixture of both, or by using a machine learning algorithm. The repeated implementation may be in chronological order or any order prepared based on the practical requirements.

Likewise, the methods for ambiguity resolution in instruction statement interpretation of an instruction statement as described herein can also be repeatedly implemented for all the instruction statements that require ambiguity resolution in all instruction sets to be executed in a testing process or a process of operating a device.

Exemplary Embodiments

Embodiments of the present invention will be described, by way of example only, with reference to the drawings. Like reference numerals and characters in the drawings refer to like elements or equivalents.

Some portions of the description which follows are explicitly or implicitly presented in terms of algorithms and functional or symbolic representations of operations on data within a computer memory. These algorithmic descriptions and functional or symbolic representations are the means used by those skilled in the data processing arts to convey most effectively the substance of their work to others skilled in the art. An algorithm is here, and generally, conceived to be a selfconsistent sequence of steps leading to a desired result. The steps are those requiring physical manipulations of physical quantities, such as electrical, magnetic or optical signals capable of being stored, transferred, combined, compared, and otherwise manipulated.

Unless specifically stated otherwise, and as apparent from the following, it will be appreciated that throughout the present specification, discussions utilizing terms such as "resolving", "scoring", "ranking", "factoring in", "assigning" or the like, refer to the action and processes of a computer system, or similar electronic device, that manipulates and transforms data represented as physical quantities within the computer system into other data similarly represented as physical quantities within the computer system or other information storage, transmission or display devices.

The present specification also discloses apparatus for performing the operations of the methods. Such apparatus may be specially constructed for the required purposes, or may comprise a computer or other computing device selectively activated or reconfigured by a computer program stored therein. The algorithms and displays presented herein are not inherently related to any particular computer or other apparatus. Various machines may be used with programs in accordance with the teachings herein. Alternatively, the construction of more specialized apparatus to perform the required method steps may be appropriate. The structure of a computer will appear from the description below.

In addition, the present specification also implicitly discloses a computer program, in that it would be apparent to the person skilled in the art that the individual steps of the method described herein may be put into effect by computer code. The computer program is not intended to be limited to any particular programming language and implementation thereof. It will be appreciated that a variety of programming languages and coding thereof may be used to impement the teachings of me disclosure contained herein. Moreover, the computer program is not intended to be limited to any particular control flow. There are many other variants of the computer program, which can use different control flows.

Furthermore, one or more of the steps of the computer program may be performed in parallel rather than sequentially. Such a computer program may be stored on any computer readable medium. The computer readable medium may include storage devices such as magnetic or optical disks, memory chips, or other storage devices suitable for interfacing with a computer. The computer readable medium may also include a hard-wired medium such as exemplified in the Internet system, or wireless medium such as exemplified in the GSM mobile telephone system. The computer program when loaded and executed on such a generalpurpose computer effectively results in an apparatus that implements the steps of the preferred method.

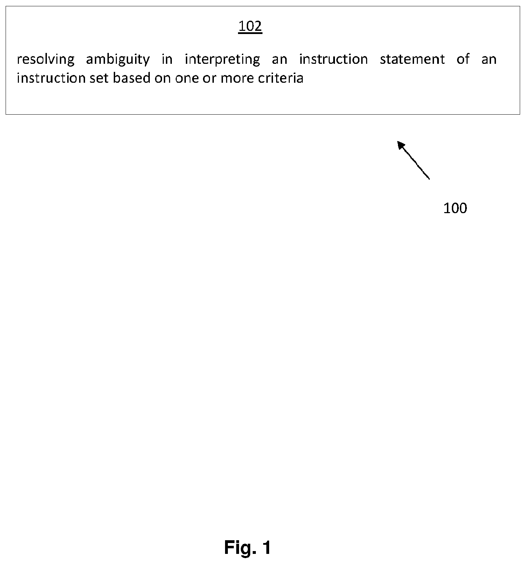

Fig. 1 shows a flow diagram illustrating an embodiment of a method 100 for resolving ambiguity in instruction statement interpretation. The method 100 includes:

- step 102: resolving ambiguity in interpreting an instruction statement of an instruction set based on one or more criteria.

As described above, in the method 100, an instruction set can be generated via various means. For example, the instruction set may be generated by a user through any means using natural languages such as English, instead of programming languages. For example, the user may speak out the instruction set to a voice recognition input device to provide the instruction set to a system, or use a mouse, keyboard, touch screen, or any form of textual input device to type out the instruction set to a system. Also, the user may use a mouse, keyboard, touch screen, or any other form of user interfaces (UIs) to perform steps, which are observed by a program (e.g. macro recording) to generate the instruction set. Additionally or alternatively, the instruction set may be generated through an automated process. programs, when executed, enable the computing device 1000 to perform one or more features of embodiments discussed herein. In various embodiments, the computer

The instruction set may include one or more instruction statements that need to be executed. The execution of the instruction set may be to achieve different technical purposes. For example, it may be for testing whether a user interface of a website or an application to be implemented in a mobile device works as expected, or for operating devices that are controllable by vocal instructions and/or non-vocal instructions via interacting with user interfaces of the devices.

To execute the instruction set, the instruction set may need to be processed to split the instruction set into one or more instruction statements, which in turn will be executed individually. The execution of the one or more instruction statements requires interpretation of the one or more instruction statements.

Due to the nature of the instruction set in the present application, the closer the format of the instruction statements is to a natural spoken language, the more complex the interpretation of the instruction statements may be, the more likely the instruction statements may have multiple interpretations, and the more likely ambiguity in instruction statement interpretation may occur. For example, on a login page of a website or an application, it is not uncommon to have an element of a login button in the centre of the screen for a form submission, and another element of a login button on the top right of the screen to redirect to the login page it is on. In such case, when an instruction statement contains keywords such as "click login button", ambiguity occurs in interpreting this instruction statement, since there are two possible interpretations of this instruction statement, being related to the element of the login button in the centre of the screen and the element of the login button on the top right of the screen, respectively.

The method 100 of the present application, as shown in the embodiment of Fig. 1, advantageously provides a technical solution for ambiguity resolution in instruction statement interpretation.

As indicated in step 102, the method 100 resolves ambiguity in interpreting an instruction statement of an instruction set based on one or more criteria. In various embodiments, the one or more criteria include:

- proximity to one or more selected interpretations of one or more previous instruction statements,
- validity of each interpretation of the instruction statement,
- validity of keyword, phrase or their variants of the instruction statement,
- validity of a context of the instruction statement,
- proximity to one or more related elements,
- similarity and/or proximity to a provided image,
- instruction statement modifier, and
- instruction statement specific parameter.

It is appreciable by those skilled in the art that the one or more criteria are not limited to the above examples. Those criteria of a similar nature as the above examples may also be used.

The step 102 requires obtaining one or more interpretations of the instruction statement. As described above under "Terms Description", when processing an instruction statement, the system may scan the entire user interface based on keyword search in the code for the testing or operation to identify a proper element to interact with for executing the instruction statement. When the keyword search returns one or more elements that tally with or partially match the keyword, the one or more interpretations of the instruction statement are obtained corresponding to the one or more elements. When there are more than one interpretation obtained for a single instruction statement, it is considered that ambiguity in instruction statement interpretation occurs.

In an embodiment, the obtained one or more interpretations of the instruction statement may be displayed on the screen for the user to manually select. Once an interpretation is selected by the user among the one or more interpretations, the ambiguity in instruction statement interpretation may be considered as resolved.

The obtained one or more interpretations of the instruction statement requires being scored based on the one or more criteria, either alone or in any combination, and/or ranking of the scoring, before being displayed to the screen for the user to manually select an interpretation among the one or more interpretations based on the ranking, or before the system automatically selects an interpretation among the one or more interpretations based on the ranking.

In the other embodiment, the step 102 of resolving ambiguity requires a step of scoring the one or more interpretations of the instruction statement based on the one or more criteria. During the step of scoring the one or more interpretations of the instruction statement, each possible interpretation (which may be interchangeably referred to as "each interpretation" ) of the instruction statement is scored based on the one or more criteria. The scoring of each possible interpretation of an instruction statement requires that, a corresponding score is given to the each possible interpretation for each criterion of the one or more criteria.

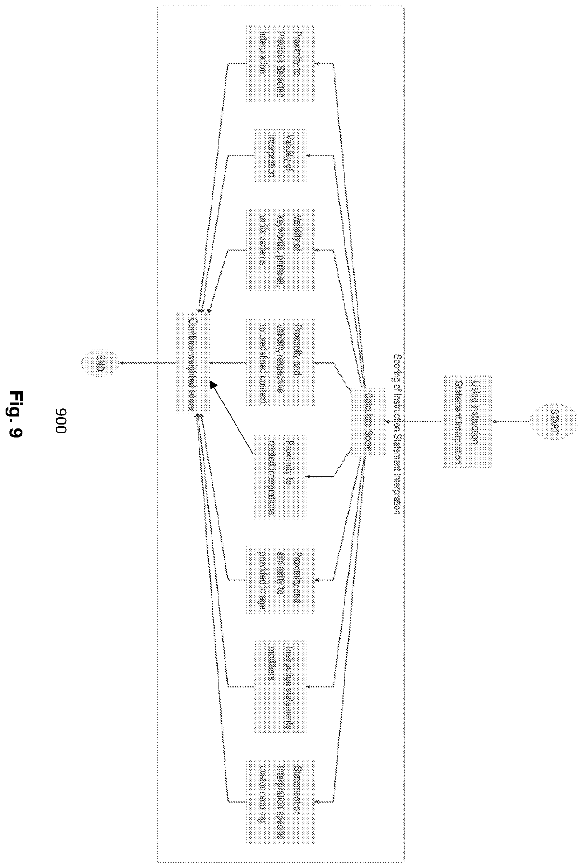

For example, in view of the above exemplified criteria, the step of scoring the one or more interpretations of the instruction statement may include scoring one or more of a proximity to one or more selected interpretations of one or more previous instruction statements, a validity of each interpretation of the instruction statement, a validity of keyword, phrase or their variants of the instruction statement, a validity of a context of the instruction statement, a proximity to one or more related elements, a similarity and/or proximity to a provided image, one or more instruction statement modifiers. The scoring may factor in an instruction statement specific parameter. An exemplified flowchart of the of scoring of the one or more interpretations of the instruction statement is illustrated in Fig. 9 and will be described in detail in the corresponding paragraphs.

In the present application, the one or more previous instruction statements may refer to one or more previous instruction statements (e.g. previous steps/actions) in the same instruction set as the instruction statement that is being interpreted. Alternatively, the one or more previous instruction statements may refer to one or more previous instruction statements in one or more previous instruction sets in the same testing or operation process. Of course, scoring a possible interpretation of the instruction statement based on its proximity to the one or more previous instruction statements in the same instruction set may provide more satisfying ambiguity resolution than to the one or more previous instruction statements in the previous instruction sets, since there is a closer logic hierarchy distance between the instruction statement being interpreted and the one or more previous instruction statements in the same instruction set.

In some examples, each criterion of the one or more criteria in the method 100 may be assigned with a respective weightage. For each possible interpretation of an instruction statement, the respective weightage of each criterion of the one or more criteria is calculated with the corresponding scores given to the each possible interpretation for the each criterion of the one or more criteria to determine respective weighted scores. The respective weighted scores can be combined in various manners, e.g. by involving summation, deduction, multiply and/or division, to generate a total score for each possible interpretation of an instruction statement.

For example, the total score may be generated using a summation function. An example is shown in Equation (1) below.

$$TotalScore = Weight1*Criteria1 + Weight2*Criteria2 \ldots + WeightX*CriteriaX$$

Alternatively, the total score may be generated using a multiply function. An example is shown in Equation (2) below:

$$TotalScore = Weight1*Criteria1 * Weight2 * Criteria\ 2 \ldots * WeightX*CriteriaX$$

Further, the total score may be generated using a more complex summation function. An example is shown in Equation (3) below:

$$TotalScore = Criteria1*Criteria2*Weight1 + Criteria1*Criteria3*Weight2 + \ldots$$

It is appreciable by those skilled in the art that, more complex summation functions could be built, to generate the total score. The more complex summation functions can be implemented in programming language with more complex logic. For example, an "if/else" statement could be included in a scoring module in the present ambiguity resolution system, to heavily penalise possible scoring criteria below a certain score threshold in certain specific implementations.

In the above described embodiment, further to the step of scoring, the step 102 of resolving ambiguity also requires a step of ranking. For all of the possible interpretations of an instruction statement, their respective total scores are ranked. The interpretation with the highest score can then be selected/chosen as the interpretation of the instruction statement, for execution of the instruction statement.

It is appreciable to those skilled in the art that, in an alternative embodiment, a negative score may be considered as a "better" scoring. In such embodiment, the interpretation with the lowest score may then be selected/chosen as the interpretation of the instruction statement, for being used for execution of the instruction statement.

As described above, all the possible interpretations of the instruction statement may be displayed to the screen for the user to manually select an interpretation among the one or more interpretations based on the ranking. The displaying may be implemented in any possible manner based on practical needs. For example, the displaying may be in a format of a list of all the possible interpretations of the instruction statement with the respective total scores and the respective rankings, for the user to select.

In another example, the system may recommend an interpretation among all the possible interpretations of the instruction statement based on the ranking, and display the recommended interpretation in a dialog window or a notification to the screen for the user to confirm.

In a more automatic manner, the system selects an interpretation among the one or more interpretations based on the ranking without intervention (e.g. confirmation) from the user.

In the above described manners, the ambiguity in instruction statement interpretation is thereby resolved automatically by the system.

In addition, in the present application, the ambiguity resolution may be implemented by using a machine learning algorithm. By training the algorithm against any datasets generated by the ambiguity resolution methods and systems described herein, the machine learning algorithm or dataset can be used as a part of a larger machine learning algorithm or dataset. Any machine learning algorithm trained against a dataset built using the ambiguity resolution methods described herein is an implementation of the present ambiguity resolution methods and systems.

In the present application, the ambiguity resolution may be performed individually for each instruction statement that has ambiguity in instruction statement interpretation. Alternatively, the ambiguity resolution may be performed collectively for all instruction statements that have ambiguity in instruction statement interpretation, prior to execution of all the instruction statements.

Subsequent to step 102, based on practical needs, the instruction statement may be executed as soon as the ambiguity is resolved, or after all the instruction statements in an instruction set or in all the instruction sets are received and interpreted with ambiguity resolved, where necessary.

In addition, a testing process or an operation process as described above may include a plurality of instruction sets. Based on practical needs, the execution of the plurality of instruction sets may be performed individually as soon as one instruction set of the plurality of instruction sets is received and the one or more instruction statements in the instruction set are interpreted, with ambiguity in instruction statement interpretation resolved, where necessary. Alternatively, the execution of the plurality of instruction sets may be performed collectively after all of the plurality of instruction sets are received and the one or more instruction statements in all the plurality of instruction sets are interpreted, with ambiguity in instruction statement interpretation resolved, where necessary.

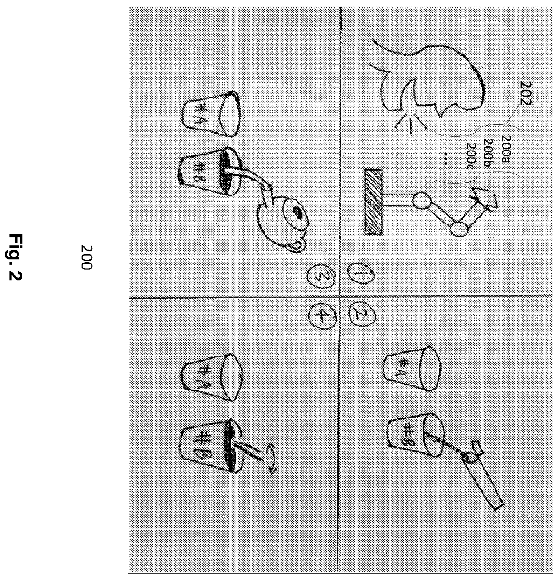

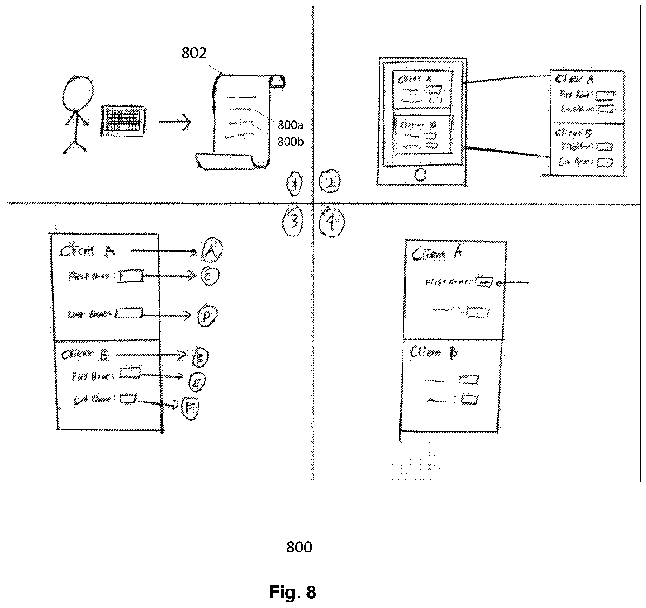

For the sake of simplicity, the present application in Figs 2 to 7 provide exemplary embodiments demonstrating situations where the ambiguity can be resolved based on a single criterion of the above described one or more criteria,. It is appreciable to those skilled in the art that, in the various embodiments shown in these figures, the actual situation of ambiguity may involve more complex factors that would require more than one criterion to resolve. In this regard, Fig. 8 shows an example in which ambiguity in instruction statement interpretation is resolved based on an exemplified combination of multiple criteria. It is appreciable to those skilled in the art that other combinations of multiple criteria are implementations of the example shown in Fig. 8.

In various embodiments, the one or more instruction statement modifiers include one or more additional keywords provided to adjust the scoring. For example, the one or more additional keywords may be provided to adjust the score relative to either a context, a screen of a computing system/device in which the method 100 is implemented, or other conflicting elements which may appear during instruction statement interpretation.

The one or more additional keywords may be defined in directional terms. Examples of instruction statements as such defined are shown as as follows:

I click on "login" found at "top right" of "screen"
I click on "login" found at "bottom" of "screen"
I inside context "User" click on "login" found at "bottom" of "context"
I click on "login" found at "bottom" of "results"

In various embodiments, the instruction statement specific parameter includes a specific custom scoring applicable for a specific instruction statement or a specific interpretation. For example, specific instruction statements and interpretations can be programmed either by an implementer of the system or by the user of the system, to have certain pre-programmed scoring.

The instruction statement specific parameter is used as one method to tweak the various criteria, either in a specific instruction statement scenario (for example, only used when commanding button presses), or a scenario that affect multiple instruction statements (for example, a user who never wants the elements in the website header can define in scripting that any possible interpretation related to elements in the website header will have a high negative score).

It is understandable to those skilled in the art that the instruction statement modifiers and the instruction statement specific parameter can be implemented in various scenarios.

If, as described above, the instruction set in the present embodiment is for testing whether a user interface (for example, a user interface of a website or an application to be implemented in a mobile device) works as expected, the instruction set is a testing script. In this scenario, the ambiguity resolution rendered in step 102 is performed in a scripted user interface interaction.

As described above, the methods of the present application, as described herein, use keyword driven testing instead of conventional usage of programming identifier. It allows testers to perform user interaction processes based on what they see on screen, instead of based on non-visible identifiers, which in turn allows for test scripts/instruction sets to be easily validated, and maintained by non-programmers.

However, as keywords are not definitive, keyword driven testing introduces a problem of ambiguity. For example, on a login page of a website or an application, it is not uncommon to have an element of a login button in the centre of the screen for a form submission, and another element of a login button on the top right of the screen to redirect to the login page it is on. In such case, when an instruction statement contains keywords such as "click login button", ambiguity occurs in interpreting this instruction statement, since there are two possible interpretations of this instruction statement related to the element of the login button in the centre of the screen and the element of the login button on the top right of the screen, respectively.

In view of the above, the present application advantageously provides solutions of ambiguity resolution that enables users/testers to enjoy advantage of scripted keyword driven testing. Even with ambiguity, the scripted keyword driven testing can be running smoothly through a consistent means of ambiguity resolution that is intuitive for users/testers.

Fig. 2 shows a diagram illustrating an embodiment 200 of the present disclosure, in which ambiguity in interpreting an instruction statement of an instruction set, which appear in order to execute the instruction statement, is resolved based on proximity to one or more selected interpretations of one or more of previous instruction statements. As described above, ambiguity appears in situations where a single instruction statement has multiple possible interpretations.

As described above, in the present application, the one or more previous instruction statements may refer to one or more previous instruction statements (e.g. previous steps/actions) in the same instruction set as the instruction statement that is being interpreted. Alternatively, the one or more previous instruction statements may refer to one or more previous instruction statements in one or more previous instruction sets in the same testing or operation process. Of course, scoring a possible interpretation of the instruction statement based on its proximity to the one or more previous instruction statements in the same instruction set may provide more satisfying ambiguity resolution than to the one or more previous instruction statements in the previous instruction sets, since there is a closer logic hierarchy distance between the instruction statement being interpreted and the one or more previous instruction statements in the same instruction set.

As shown in part ① of Fig. 2, in the embodiment 200, a user speaks out an instruction set 202 to a voice-controllable robot which interacts with two cups identified as cup #A, and cup #B respectively. It is appreciable to those skilled in the art that the instruction set 202 can be provided to the robot via other means of input alternative or additional to voice input. In the present embodiment, the instruction set 202 may include the following instruction statements:

Fill up cup B with coffee powder.
Fill up cup with hot water.
Stir cup for 30 seconds.

For the sake of simplicity, the above instruction statements are referred to as instruction statement 200a, instruction statement 200b, and instruction statement 200c, respectively. Part ② of Fig. 2 shows execution of the instruction statement 200a, during which coffee powder is poured into cup #B by the voice-controlled robot (not shown in part ② of Fig. 2 for the sake of simplicity). In executing the instruction statement 200a, no ambiguity occurs in instruction statement interpretation of the instruction statement 200a as there is only one cup #B in the embodiment 200 and it is identified on its external wall using its unique ID B.

Part ③ of Fig. 2 shows execution of the instruction statement 200b, during which the voice-controlled robot (not shown in part ③ of Fig. 2 for the sake of simplicity) pours hot water from a kettle into a cup. In executing the instruction statement 200b, ambiguity occurs in instruction statement interpretation of the instruction statement 200b as there are two cups, cup #A and cup #B, in the embodiment 200. However, as the interpretation directed to cup #B was selected and used in the previous instruction statement 200a, an interpretation of the instruction statement 200b directed to cup #B is considered in closer proximity to the selected interpretation of the previous instruction statement 200a than another interpretation of the instruction statement 200b directed to cup #A, thus is given a higher score.

Part ④ of Fig. 2 shows execution of the instruction statement 200c, during which the voice-controllable robot (not shown in part ④ of Fig. 2 for the sake of simplicity) stirs water inside a cup. The keyword cup could mean either cup #A or cup #B. Thus, ambiguity occurs in instruction statement interpretation of the instruction statement 200c, as the instruction statement 200c has two interpretations directed to cup #A or cup #B, respectively. However, as the interpretation directed to cup #B has been selected and used in the previous two instruction statements 200a and 200b, the interpretation of the instruction statement 200c directed to cup #B is given a higher score than the interpretation of the instruction statement 200c directed to cup #A.

It is appreciable to those skilled in the art that, Fig. 2 focuses on demonstrating a situation where the ambiguity can be resolved based on a single criterion, for the sake of simplicity. The actual situation of ambiguity may involve more complex factors that would require more than one criterion to resolve, as exemplified in Fig. 8.

In addition, in the present embodiment 200, the instruction statement 200a is depicted as being executed as soon as the interpretation is performed with no ambiguity, and the instruction statements 200b and 200c are depicted as being executed as soon as the ambiguity in interpreting the respective instruction statements is resolved. It is also possible that the instruction statements 200a, 200b and 200c are executed after all the instruction statements in the instruction set 202 or in all the instruction sets (not shown in Fig. 2) are received and interpreted, with ambiguity resolved where necessary.

In addition, as described above, a testing process or an operation process may include a plurality of instruction sets. Based on practical needs, the execution of the plurality of instruction sets may be performed individually as soon as one instruction set of the plurality of instruction sets is received and the one or more instruction statements in the instruction set are interpreted, with ambiguity in instruction statement interpretation resolved, where necessary. Alternatively, the execution of the plurality of instruction sets may be performed collectively after all of the plurality of instruction sets are received and the one or more instruction statements in all the plurality of instruction sets are interpreted, with ambiguity in instruction statement interpretation resolved, where necessary.

It is appreciable by those skilled in the art that scoring based on proximity (also referred to as "proximity scoring") can occur in any combinations of visual distance and hierarchy distance.

For example, inside a website, the elements on screen can be structured in a tree structure such as HTML. An example may include the following structure:

```
<h1 >Sign in</h1 >
 <form id="login">
      <input>Username</input>
      <button>Sign in</button>
```

```
</form>
```

In such a setup, from the input box of "Username", the hierarchy distance to the "Sign in" button, is closer than to the "Sign in" h1 header, as both the button and the input share the same "parent" element of the "login" form. Thus, the "Sign in" button is given a better scoring than the "Sign in" h1 header.

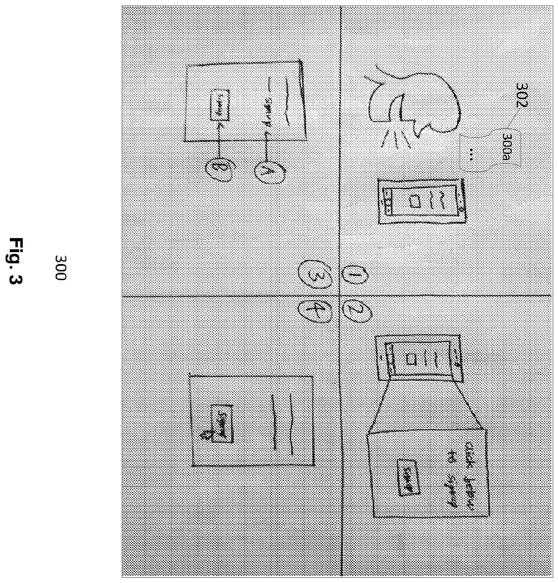

Fig. 3 shows a diagram illustrating an embodiment 300 of the present disclosure, in which ambiguity in interpreting an instruction statement of an instruction set, which appear in order to execute the instruction statement, is resolved based on validity of interpretation of the instruction statement. As described above, ambiguity appear in situations where a single instruction statement has multiple possible interpretations.

As shown in part ① of Fig. 3, in the embodiment 300, a user speaks out an instruction set 302, via voice control, to command a mobile electronic device. It is appreciable to those skilled in the art that the instruction set 302 can be provided to the mobile electronic device via other means of input alternative or additional to voice input. In the present embodiment, the instruction set 302 may include the following instruction statement:
Click on Signup

For the sake of simplicity, the above instruction statement is referred to as instruction statement 300a. Parts ② and ③ of Fig. 3 show interpretation of the instruction statement 300a, during which an interpretation of the instruction statement 300a is selected from multiple interpretations of the instruction statement 300a, and ambiguity in instruction statement interpretation of the instruction statement 300a is resolved. Part ④ of Fig. 3 shows execution of the instruction statement 300a, during which the selected interpretation of the instruction statement 300a is used for the execution of the instruction statement 300a.

Part ② of Fig. 3 shows an enlarged view of a user interface of the mobile electronic device. As shown in part ② of Fig. 3, two elements having the "signup" text are found in the user interface. It is appreciable to those skilled in the art that the user interface in part ② of Fig. 3 only shows elements relevant to the instruction statement 300a, for the sake of simplicity.

In part ③ of Fig. 3, an interpretation of the instruction statement 300a directed to a text element on the user interface having the text "signup" is labelled as interpretation A of the instruction statement 300a. Another interpretation of the instruction statement 300a directed to a button element on the user interface having the text "signup" is labelled as interpretation B of the instruction statement 300a. Interpretation B directed to a button element is given a higher score in the present embodiment than interpretation A directed to a text element. The ambiguity in instruction statement interpretation of the instruction statement 300a is thereby resolved.

In part ④ of Fig. 3, the button element having the text "signup" on the user interface is clicked on due to the higher score of Interpretation B. The instruction statement 300a is thereby executed.

It is appreciable to those skilled in the art that, for websites, it is common for what visually looks like a "button" on screen to not use the official HTML syntax of a "button" tag. To render satisfying results, in the present solution, a text element is considered as a possible ambiguous interpretation with a lower score, so that in absence of the official button syntax, the system would work still as expected.

It is appreciable to those skilled in the art that, Fig. 3 focuses on demonstrating a situation where the ambiguity can be resolved based on a single criterion, for the sake of simplicity. The actual situation of ambiguity may involve more complex factors that would require more than one criterion to resolve, as exemplified in Fig. 8.

In addition, in the present embodiment 300, the instruction statement 300a is depicted as being executed as soon as the ambiguity in interpreting the instruction statements 300a is resolved. It is also possible that the instruction statement 300a is executed after all the instruction statements in the instruction set 302 or in all the instruction sets (not shown in Fig. 3) are received and interpreted, with ambiguity resolved where necessary.

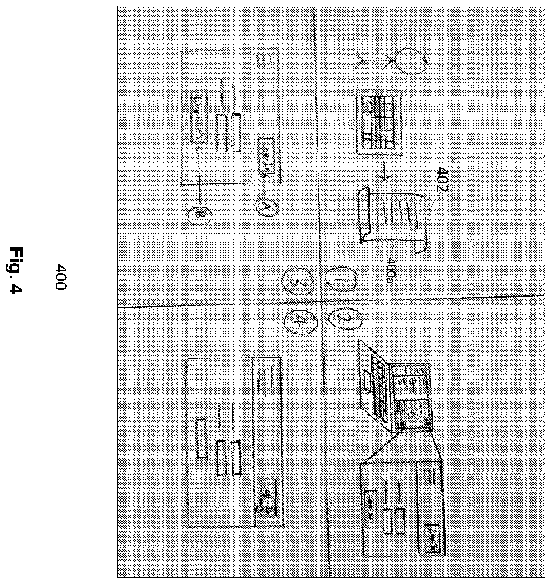

Fig. 4 shows a diagram illustrating an embodiment 400 of the present disclosure, in which ambiguity in interpreting an instruction statement of an instruction set, which appear in order to execute the instruction statement, is resolved based on validity of keyword of the instruction statement. As described above, ambiguity appears in situations where a single instruction statement has multiple possible interpretations.

As shown in part ① of Fig. 4, in the embodiment 400, a user uses a keyboard to type out an instruction set 402 to be used on a computer or a virtual server. It is appreciable to those skilled in the art that the instruction set 402 can be provided to the computer or virtual server via other means of input alternative or additional to keyboard input. In the present embodiment, the instruction set 402 may include the following instruction statement:
I.click("Log-In");

For the sake of simplicity, the above instruction statement is referred to as instruction statement 400a. Parts ② and ③ of Fig. 4 show interpretation of the instruction statement 400a, during which ambiguity in instruction statement interpretation of the instruction statement 400a is resolved. Part ④ of Fig. 4 shows execution of the instruction statement 400a, during which the selected interpretation of the instruction statement 400a is used for the execution of the instruction statement 400a.

Part ② of Fig. 4 shows an enlarged view of a user interface of the computer or virtual server. As shown in part ② of Fig. 4, two elements having the "Log-in" text are found in the user interface. It is appreciable to those skilled in the art that the user interface in part ② of Fig. 4 only shows elements relevant to the instruction statement 300a, for the sake of simplicity.

In part ③ of Fig. 4, an interpretation directed to an element "Log-In" on the user interface, which is of exact match of the "Log-In" text, is labelled as Interpretation A of the instruction statement 400a. Another interpretation directed to an element "Log-In's", which is of partial match of the "Log-In" text, is labelled as Interpretation B of the instruction statement 400a. Interpretation A of exact match of the text is given a higher score in the present embodiment than Interpretation B of a partial match. The ambiguity in instruction statement interpretation of the instruction statement 400a is thereby resolved based on validity of keyword of the instruction statement 400a.

In part ④ of Fig. 4, the element "Log-In" on the user interface, which is of exact match of the "Log-In" text, is clicked on, due to the higher score of Interpretation A. The instruction statement 400a is thereby executed.

In the present application, validity of keyword includes validity of keywords, phrases and their variants in the instruction statement. Validity of keyword can be scored in multiple ways, including but not limited to: partial matching, capitalization, thesaurus, language translation, and the like. For example, the keyword "Log-in" could match the following keywords, phrases and their variants, the closer an exact match occurs, the higher the score is given:

- Log-In
- log in
- login
- log-in's
- signin
- sign in

It is appreciable to those skilled in the art that, Fig. 4 focuses on demonstrating a situation where the ambiguity can be resolved based on a single criterion, for the sake of simplicity. The actual situation of ambiguity may involve more complex factors that would require more than one criterion to resolve, as exemplified in Fig. 8.

In addition, in the present embodiment 400, the instruction statement 400a is depicted as being executed as soon as the ambiguity in interpreting the instruction statements 400a is resolved. It is also possible that the instruction statement 400a is executed after all the instruction statements in the instruction set 404 or in all the instruction sets (not shown in Fig. 4) are received and interpreted, with ambiguity resolved where necessary.

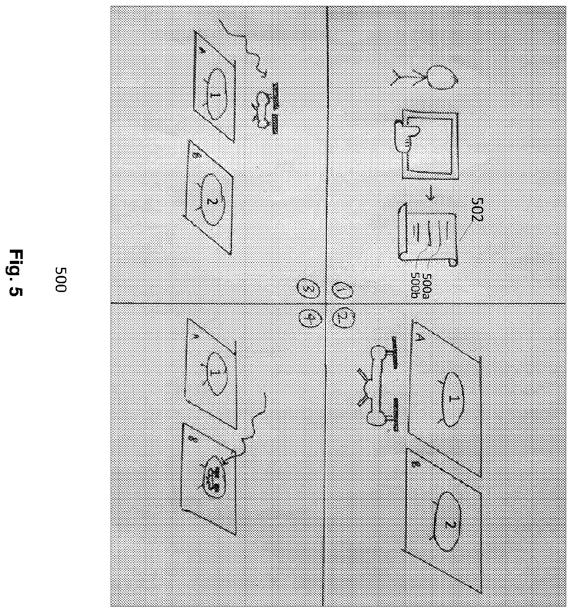

Fig. 5 shows a diagram illustrating an embodiment 500 of the present disclosure, in which ambiguity in interpreting an instruction statement of an instruction set, which appear in order to execute the instruction statement, is resolved based on validity of context of the instruction statement. As described above, ambiguity appear in situations where a single instruction statement has multiple possible interpretations.

As shown in part ① of Fig. 5, in the embodiment 500, a user interacts with a touch tablet to setup an instruction set 502 for a drone. In this embodiment, the user interface of the drone operation on the touch tablet could prompt for confirmation on interpretations of all instruction statements by displaying all the possible interpretations of all the instruction statements to the screen of the touch tablet for the user to select proper interpretations therefrom, prior to execution. It is appreciable to those skilled in the art that the instruction set 502 can be provided to the touch tablet via other means of input alternative or additional to touch screen. In the present embodiment, the instruction set may include the following instruction statements:

Fly to zone A
Land on table, inside zone B

For the sake of simplicity, the above instruction statements are referred to as instruction statement 500a and instruction statement 500b, respectively. Part ② of Fig. 5 shows two zones, zone A and zone B, each of which has a table therein. A drone to be operable in response to the instruction statements of the instruction set 502 is shown in part ② of Fig. 5.

Part ③ of Fig. 5 shows execution of the instruction statement 500a, during which the drone flies into zone A. In executing the instruction statement 500a, no ambiguity occurs in instruction statement interpretation of the instruction statement 500a as there is only one zone A in the embodiment 500 and it is identified on its surface using its unique ID A, as shown in part ③ of Fig. 5.

Part ④ of Fig. 5 shows execution of the instruction statement 500b. In executing the instruction statement 500b, ambiguity occurs in instruction statement interpretation of the instruction statement 500b as there are two tables, table 1 in zone A and table 2 in zone B, in the present embodiment 500. Since a context of "inside zone B" is defined in the instruction statement 500b, an interpretation of the instruction statement 500a that lands the drone on table 2 of zone B is given a higher score than another interpretation of the instruction statement 500a that lands the drone on table 1 of zone A. The ambiguity in instruction statement interpretation of the instruction statement 500b is thereby resolved based on validity of context.

In the present application, validity of context can be scored according to distance to the center or boundary of a context zone, with a strong positive bias towards within the context zone and a negative bias outside of the context zone. Additionally or alternatively, proximity scoring may occur in any combinations of visual distance and hierarchy distance, as described above.

For the sake of simplicity, Fig. 5 provides am example demonstrating a situation of ambiguity that can be resolved based on a single criterion. It is appreciable to those skilled in the art that, the actual situation of ambiguity may involve more complex factors that would require more than one criterion to resolve, as exemplified in Fig. 8. For example, there could be multiple possible tables within the context B, which require the ambiguity to be resolved by more criteria than the criterion exemplified in Fig. 5.

In addition, in the present embodiment 500, the instruction statement 500b is depicted as being executed as soon as the ambiguity in interpreting the instruction statements 500b is resolved. It is also possible that the instruction statements 500a and 500b are executed after all the instruction statements in the instruction set 502 or in all the instruction sets (not shown in Fig. 5) are received and interpreted, with ambiguity resolved where necessary.

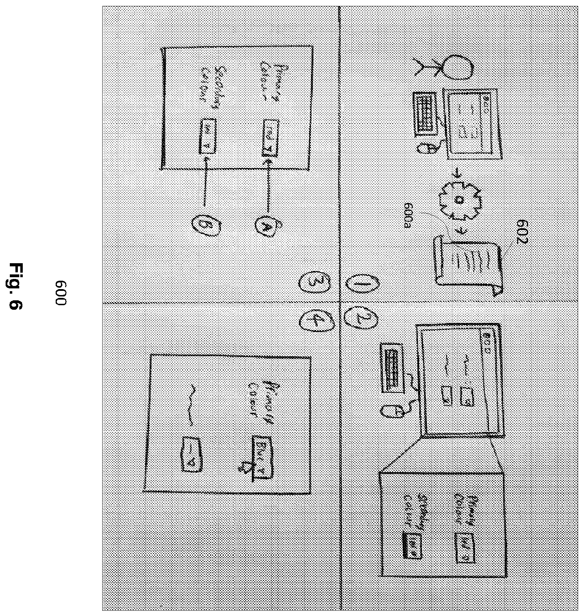

Fig. 6 shows a diagram illustrating an embodiment 600 of the present disclosure, in which ambiguity in interpreting an instruction statement of an instruction set, which appear in order to execute the instruction statement, is resolved based on proximity to one or more related elements. As described above, ambiguity appears in situations where a single instruction statement has multiple possible interpretations.

As shown in part ① of Fig. 6, in the embodiment 600, a user uses a keyboard and mouse to interact with an application on a computer. The interaction actions/steps of the conducted interactions can be observed by a program (such as macro recording) which then translates the interaction actions/steps into an equivalent series of instruction statement, e.g. an instruction set 602. It is appreciable to those skilled in the art that the instruction set 602 can be provided to the computer via other means of input alternative or additional to keyboard and/or mouse. In the present embodiment, the instruction set 602 may include the following instruction statement:

Using dropdown "Primary Colour" select "Blue"

For the sake of simplicity, the above instruction statement is referred to as instruction statement 600a. Part ② of Fig. 6 shows an enlarged view of a user interface of the application. As shown in part ② of Fig. 6, two dropdown menu elements are found in the user interface. The two dropdown menu elements, having texts "Primary Colour" and "Secondary Colour" located nearby, have red as a default option. It is appreciable to those skilled in the art that the user interface in part ② of Fig. 6 only shows elements relevant to the instruction statement 600a, for the sake of simplicity.

In part ③ of Fig. 6, two interpretations of the instruction statement 600a directed to the two dropdown menu elements each having an option of blue are identified as interpretation A and Interpretation B, respectively. The Interpretation A and interpretation B are not linked within the code to the texts "Primary Colour" and "Secondary Colour". In view of their code structure, the two dropdown menu elements have no implied relation to the texts "Primary Colour" and "Secondary Colour". Thus, ambiguity occurs in instruction statement interpretation of the instruction statement 600a. An example of such code could include the following structure:

```
<div class="text-box">
    <p>Primary Colour</p>
    <p>Secondary Colour</p>
    </div>
    <div class="input-box">
    <select id="a">
        <option>red</option>
        <option>blue</option>
    </select>
    <select id="b">
        <option>red</option>
        <option>blue</option>
    </select>
    </div>
```

Part ④ of Fig. 6 shows execution of the instruction statement 600a. Although there is no implied relation between the two dropdown menu elements and the text "Primary Colour", the text "Primary Colour" on the user interface may be considered a related element of the two dropdown menu elements as it is also recited in the instruction statement 600a. Since Interpretation A directed to the dropdown menu element next to the text "Primary Colour" is closer to the related element "Primary Colour" than Interpretation B directed to the dropdown menu element next to the text "Secondary Colour", it is given a higher score than Interpretation B. The ambiguity in instruction statement interpretation of the instruction statement 600b is thereby resolved based on proximity to one or more related elements. Additionally or alternatively, proximity scoring may occur in any combinations of visual distance and hierarchy distance, as described above.

For the sake of simplicity, Fig. 6 provides an example demonstrating a situation of ambiguity that can be resolved based on a single criterion. It is appreciable to those skilled in the art that, the actual situation of ambiguity may involve more complex factors that would require more than one criterion to resolve, as exemplified in Fig. 8.

In addition, in the present embodiment 600, the instruction statement 600a is depicted as being executed as soon as the ambiguity in interpreting the instruction statement 600a is resolved. It is also possible that the instruction statement 600a is executed after all the instruction statements in the instruction set 602 or in all the instruction sets (not shown in Fig. 6) are received and interpreted, with ambiguity resolved where necessary.

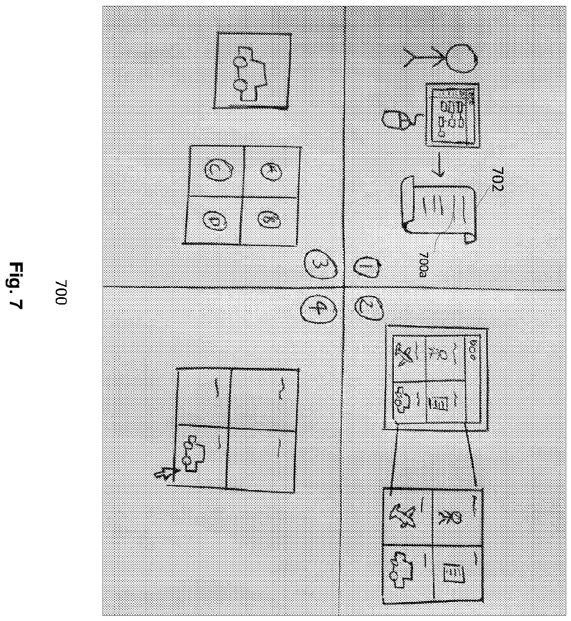

Fig. 7 shows a diagram illustrating an embodiment 700 of the present disclosure, in which ambiguity in interpreting an instruction statement of an instruction set, which appear in order to execute the instruction statement, is resolved based on similarity and/or proximity to a provided image. As described above, ambiguity appears in situations where a single instruction statement has multiple possible interpretations.

As shown in part ① of Fig. 7, in the embodiment 700, a user uses a drag and drop interface of a computer to generate an instruction set 702. It is appreciable to those skilled in the art that the instruction set 702 can be provided to the computer via other means of input alternative or additional to the drag and drop interface. In the present embodiment, the instruction set 702 may include the following instruction statement:
I.clickOnImage("./path/to/image/of/car.jpg");

For the sake of simplicity, the above instruction statement is referred to as instruction statement 700a. Part ② of Fig. 7 shows an enlarged view of a user interface of a website or an application shown on a screen of the computer. As shown in part ② of Fig. 7, four images are found in the user interface. The four images depict a man, a book, an aircraft and a car, respectively. It is appreciable to those skilled in the art that the user interface in part ② of Fig. 7 only shows elements relevant to the instruction statement 700a, for the sake of simplicity.

In part ③ of Fig. 7, an image of car provided in the instruction statement 700a is shown. Interpretations directed to the four images respectively depicting a man, a book, an aircraft and a car are identified as Interpretation A, Interpretation B, Interpretation C, and Interpretation D, respectively.

Part ④ of Fig. 7 shows execution of the instruction statement 700a. Since Interpretation D is the closest match to the provided image of car as shown in part ③ of Fig. 7, it is selected as the interpretation of the image depicting a car as shown on the user interface is selected instruction statement 700a. The ambiguity in instruction statement interpretation of the instruction statement 700b is thereby resolved based on similarity and/or proximity to a provided image. The image depicting a car as shown on the user interface is then clicked on. Additionally or alternatively, proximity scoring may occur in any combinations of visual distance and hierarchy distance, as described above.

It is appreciable to those skilled in the art that, Fig. 7 exemplifies an example demonstrating a situation of ambiguity that can be resolved based on a single criterion. It is appreciable to those skilled in the art that, the actual situation of ambiguity may involve more complex factors that would require more than one criterion to resolve. For example, due to the nature of image recognition, every combination of pixel sizes on the screen is considered as a possible interpretation. For simplicity, only Interpretations A, B, C and D are identified.

In addition, in the present embodiment 700, the instruction statement 700a is depicted as being executed as soon as the ambiguity in interpreting the instruction statement 700a is resolved. It is also possible that the instruction statement 700a is executed after all the instruction statements in the instruction set 704 or in all the instruction sets (not shown in Fig. 7) are received and interpreted, with ambiguity resolved where necessary.

Fig. 8 shows a diagram illustrating an embodiment 800 of the present application, in which ambiguity in interpreting an instruction statement of an instruction set can be resolved based on a combination of any of the above depicted criteria. In the embodiment 800, the ambiguity is resolved based on a combination of proximity to one or more related elements and validity of a context of the instruction statement. It is appreciated by those skilled in the art that ambiguity can also be resolved based on a combination of other criteria. As described above, ambiguity appears in situations where a single instruction statement has multiple possible interpretations.

As shown in part ① of Fig. 8, in the embodiment 800, a user uses a keyboard to type an instruction set 802 to test a user interface on a mobile device. It is appreciable to those skilled in the art that the instruction set 802 can be provided to the computer via other means of input alternative or additional to keyboard and/or mouse. In the present embodiment, the instruction set 802 may include the following instruction statements:

Inside Context Client A
Fill up form "First Name" with "name"

For the sake of simplicity, the above instruction statement is referred to as instruction statements 800a and 800b, respectively. Part ② of Fig. 8 shows an enlarged view of the user interface that is subject to testing.

As shown in part ③ of Fig. 8, two elements of context areas having texts "Client A" and "Client B" respectively, are identified as context A and context B. Interpretations directed to four form elements, next to texts "First Name", "Last Name" respectively under "Client A" and "Client B", are correspondingly identified as Interpretations C, D, E and F.

In part ③ of Fig. 8, based on proximity to a related element "First Name", Interpretations C and E are respectively given a score of 50, whereas Interpretations D and E are respectively given a score of 25.

In addition, in part ③ of Fig. 8, based on validity of a context of the instruction statement, interpretations C and D are respectively given a score of 100 since they are in the context of Client A as required in instruction statement 800a, while Interpretations E and F are respectively given a score of -100 since they are in a different context of Client B.

Part ④ of Fig. 8 shows execution of the instruction statement 800b. In the present embodiment, a summation function is used to combine the scores given in the multiple criteria for each interpretation of the interpretations C, D, E and F to calculate a total score for each interpretation of interpretations C, D, E and F. In this manner, total scores of Interpretations C, D, E and F are 150, 125, -50, and -75, respectively. Interpretation C is then chosen as the highest scored interpretation for executing the instruction statement 800b. The ambiguity in instruction statement interpretation of the instruction statement 800b is thereby resolved based on a combination of proximity to one or more related elements and validity of a context of the instruction statement. It is appreciated by those skilled in the art that ambiguity can also be resolved based on a combination of other criteria.

For the sake of simplicity, Fig. 8 exemplifies an example demonstrating a situation of ambiguity that can be resolved based on a combination of two criteria. It is appreciable to those skilled in the art that, the actual situation of ambiguity may involve more complex factors that would require more criteria to resolve. For example, when the user interface is a webpage containing a much longer list of over 50 possible fields, more criteria may be required to resolve ambiguity.

Fig. 9 shows a flowchart of an embodiment 900 of scoring of instruction statement interpretation, in which each possible interpretation of an instruction statement is scored.

As described above with respect to Fig. 1, to resolve ambiguity, the instruction statement interpretation may be scored based on the one or more criteria as described above in a step of scoring. The embodiment 900 shows an exemplified flowchart of scoring each of the interpretations of the instruction statement.

During the step of scoring the one or more criteria, each possible interpretation of an instruction statement is scored based on the one or more criteria. The scoring of each possible interpretation of an instruction statement requires that, a corresponding score is given to the each possible interpretation for each criterion of the one or more criteria. As shown in Fig. 9, the one or more criteria include but are not limited to:

- proximity to one or more selected interpretations of one or more previous instruction statements,
- validity of each interpretation of the instruction statement,
- validity of keyword, phrase or their variants of the instruction statement,
- validity of a context of the instruction statement,
- proximity to one or more related elements,
- similarity and/or proximity to a provided image,
- instruction statement modifier, and
- instruction statement specific parameter.

For example, in the embodiment 900, the step of scoring the one or more criteria may include scoring one or more of a proximity to one or more of previously selected interpretation of the instruction statement, a validity of each interpretation of the instruction statement, a validity of keyword, phrase or their variants of the instruction statement, a validity of a context of the instruction statement, a proximity to one or more related elements, a similarity and/or proximity to a provided image, one or more instruction statement modifiers. The scoring may factor in an instruction statement specific parameter.

In some examples, each criterion of the one or more criteria as shown in the embodiment 900 may be assigned with a respective weightage. For each possible interpretation of an instruction statement, the respective weightage of each criterion of the one or more criteria is calculated with the corresponding scores given for the each criterion of the one or more criteria to determine respective weighted scores.

The respective weighted scores can be combined in various manners, e.g. by involving summation, deduction, multiply and/or division, to generate a total score for each possible interpretation of an instruction statement.

For example, the total score may be generated using a summation function. An example is shown in Equation (1) below.

$$TotalScore = Weight1*Criteria1 + Weight2*Criteria2 \ldots + WeightX*CriteriaX$$

Alternatively, the total score may be generated using a multiply function. An example is shown in Equation (2) below:

$$TotalScore = Weight1*Criteria1 * Weight2 * Criteria\ 2 \ldots * WeightX*CriteriaX$$

Further, the total score may be generated using a more complex summation function. An example is shown in Equation (3) below:

$$TotalScore = Criteria1*Criteria2*Weight1 + Criteria1*Criteria3*Weight2 + \ldots$$

It is appreciable by those skilled in the art that, more complex summation functions could be built, to generate the total score. The more complex summation functions can be implemented in programming language with more complex logic. For example, an "if/else" statement could be included in a scoring module in the present ambiguity resolution system, to heavily penalise possible scoring criterions below a certain score threshold in certain specific implementations.

For all of the possible interpretations of an instruction statement, the respective total scores are ranked. The interpretation with the highest score can then be selected/chosen as the interpretation of the instruction statement, for being used for execution of the instruction statement. The ambiguity in instruction statement interpretation is thereby resolved.

It is appreciable to those skilled in the art that, in an alternative embodiment, a negative score may be considered as a "better" scoring. In such embodiment, the interpretation with the lowest score may then be selected/chosen as the interpretation of the instruction statement, for being used for execution of the instruction statement.

It is appreciable by those skilled in the art that, in the above embodiments described with respect to Figs. 2 to 9, all the possible interpretations of the instruction statement may be displayed to the screen for the user to manually select an interpretation among the one or more interpretations based on the ranking. The displaying may be implemented in any possible manner based on practical needs. For example, the displaying may be in a format of a list of all the possible interpretations of the instruction statement with the respective total scores and the respective rankings, for the user to select.

Alternatively or additionally, the system may recommend an interpretation among all the possible interpretations of the instruction statement based on the ranking, and display the recommended interpretation in a dialog window or a notification to the screen for the user to confirm.

In a more automatic manner, the system automatically selects an interpretation among the one or more interpretations based on the ranking, without intervention (e.g. confirmation) from the user.

In the above described manners, the ambiguity in instruction statement interpretation is thereby resolved automatically by the system.

In addition, in the present application, the ambiguity resolution may be implemented by using a machine learning algorithm. By training the algorithm against any datasets generated by the ambiguity resolution methods and systems described herein, the machine learning algorithm or dataset can be used as a part of a larger machine learning algorithm or dataset. Any machine learning algorithm trained against a dataset built using the ambiguity resolution methods described herein is an implementation of the present ambiguity resolution methods and systems.

In the present application, the ambiguity resolution may be performed individually for each instruction statement that has ambiguity in instruction statement interpretation. Alternatively, the ambiguity resolution may be performed collectively for all instruction statements that have ambiguity in instruction statement interpretation, prior to execution of all the instruction statements.

Based on practical needs, execution of the instruction statements in the above embodiments described with respect to Figs. 2 to 9 may be performed individually as soon as the ambiguity in a single instruction statement is resolved, or after all the instruction statements in an instruction set or in all the instruction sets are interpreted with ambiguity resolved, where necessary.

In addition, the execution of the plurality of instruction sets may be performed individually as soon as one instruction set of the plurality of instruction sets is received and the one or more instruction statements in the instruction set are interpreted, with ambiguity in instruction statement interpretation resolved, where necessary. Alternatively, the execution of the plurality of instruction sets may be performed collectively after all of the plurality of instruction sets are received and the one or more instruction statements in all the plurality of instruction sets are interpreted, with ambiguity in instruction statement interpretation resolved, where necessary.

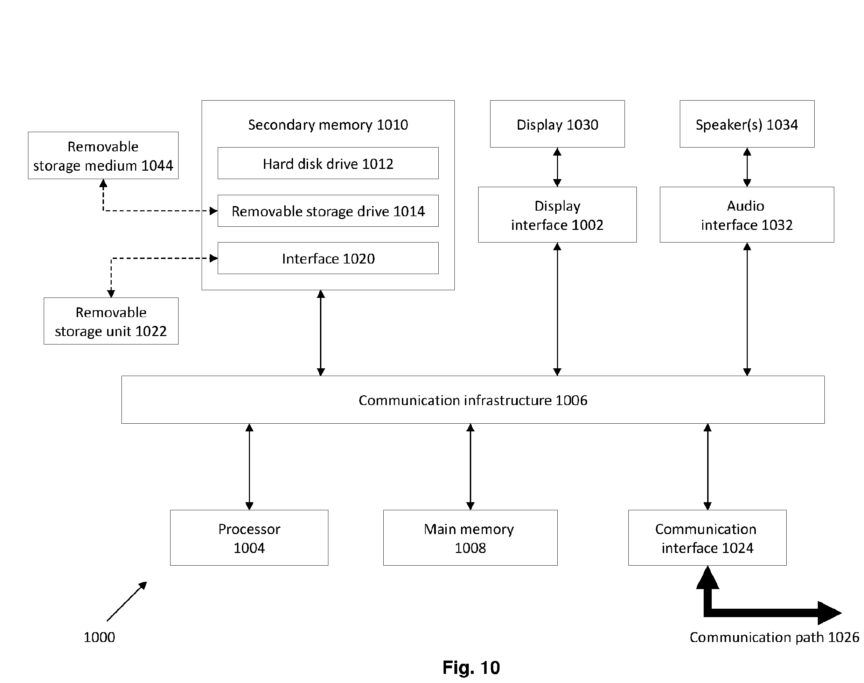

Fig. 10 shows an exemplary computing device 1000 to realize a system for facilitating ambiguity resolution in instruction statement interpretation in accordance with the embodiments shown in Figs. 1 to 9.

As shown in Fig. 10, the example computing device 1000 includes a processor 804 for executing software routines. Although a single processor is shown for the sake of clarity, the computing device 1000 may also include a multi-processor system. The processor 1004 is connected to a communication infrastructure 1006 for communication with other components of the computing device 1000. The communication infrastructure 806 may include, for example, a communications bus, cross-bar, or network.

The computing device 100 further includes a main memory 1008, such as a random access memory (RAM), and a secondary memory 1010. The secondary memory 1010 may include, for example, a storage drive 1012, which may be a hard disk drive, a solid state drive or a hybrid drive and/or a removable storage drive 1014, which may include a magnetic tape drive, an optical disk drive, a solid state storage drive (such as a USB flash drive, a flash memory device, a solid state drive or a memory card), or the like. The removable storage drive 1014 reads from and/or writes to a removable storage medium 1044 in a well-known manner. The removable storage medium 1044 may include magnetic tape, optical disk, non-volatile memory storage medium, or the like, which is read by and written to by removable storage drive 1014. As will be appreciated by persons skilled in the relevant art(s), the removable storage medium 1044 includes a non-transitory or transitory computer readable storage medium having stored therein computer executable program code instructions and/or data.

In an alternative implementation, the secondary memory 1010 may additionally or alternatively include other similar means for allowing computer programs or other instructions to be loaded into the computing device 1000. Such means can include, for example, a removable storage unit 1022 and an interface 530. Examples of a removable storage unit 1022 and interface 1030 include a program cartridge and cartridge interface (such as that found in video game console devices), a removable memory chip (such as an EPROM or PROM) and associated socket, a removable solid state storage drive (such as a USB flash drive, a flash memory device, a solid state drive or a memory card), and other removable storage units 1022 and interfaces 1030 which allow software and data to be transferred from the removable storage unit 1022 to the computer system 1000.

The computing device 1000 also includes at least one communication interface 1024. The communication interface 1024 allows software and data to be transferred between computing device 1000 and external devices via a communication path 1026. In various embodiments of the inventions, the communication interface 1024 permits data to be transferred between the computing device 1000 and a data communication network, such as a public data or private data communication network. The communication interface 1024 may be used to exchange data between different computing devices 1000 which such computing devices 1000 form part of an interconnected computer network. Examples of a communication interface 1024 can include a modem, a network interface (such as an Ethernet card), a communication port (such as a serial, parallel, printer, GPIB, IEEE 1394, RJ45, USB), an antenna with associated circuitry and the like. The communication interface 1024 may be wired or may be wireless. Software and data transferred via the communication interface 1024 are in the form of signals which can be electronic, electromagnetic, optical or other signals capable of being received by communication interface 1024. These signals are provided to the communication interface via the communication path 1026.

As shown in Fig. 10, the computing device 1000 further includes a display interface 1002 which performs operations for rendering images to an associated display 1030 and an audio interface 1032 for performing operations for playing audio content via associated speaker(s) 1034.

Although not shown in Fig. 10, it is appreciable by those skilled in the art that the computing device 1000 also includes one or more of voice recognition interface(s) and touch screen interface(s).

As used herein, the term "computer program product" or "computer readable medium" may refer, in part, to removable storage medium 1044, removable storage unit 1022, a hard disk installed in storage drive 1012, or a carrier wave carrying software over communication path 1026 (wireless link or cable) to communication interface 1024. Computer readable storage media refers to any non-transitory, non-volatile tangible storage medium that provides recorded instructions and/or data to the computing device 500 for execution and/or processing. Examples of such storage media include magnetic tape, CD-ROM, DVD, Blu-ray™ Disc, a hard disk drive, a ROM or integrated circuit, a solid state storage drive (such as a USB flash drive, a flash memory device, a solid state drive or a memory card), a hybrid drive, a magneto-optical disk, or a computer readable card such as a PCMCIA card and the like, whether or not such devices are internal or external of the computing device 500. Examples of transitory or non-tangible computer readable transmission media that may also participate in the provision of software, application programs, instructions and/or data to the computing device 1000 include radio or infra-red transmission channels as well as a network connection to another computer or networked device, and the Internet or Intranets including e-mail transmissions and information recorded on Websites and the like.

The computer programs (also called computer program code) are stored in main memory 1008 and/or secondary memory 1010. Computer programs can also be received via the communication interface 1024. Such computer programs, when executed, enable the processor 1004 to perform features of the above-described embodiments. Accordingly, such computer programs represent controllers of the computer system 1000.

Software may be stored in a computer program product and loaded into the computing device 1000 using the removable storage drive 1014, the storage drive 1012, or the interface 1050. Alternatively, the computer program product may be downloaded to the computer system 1000 over the communications path 1026. The software, when executed by the processor 1004, causes the computing device 1000 to perform functions of embodiments described herein.

In the present application, the methods and systems described above can be implemented through various means, including but not limited to: manually scoring individual interpretation of instruction statements of an instruction set in a systematic process, or automatically scoring interpretations of instruction statements of an instruction set using an application, or as part of an application.

Alternatively, the ambiguity resolution methods and systems described above can be implemented using a machine learning algorithm. By training the algorithm against any datasets generated by the ambiguity resolution methods and systems described above, this machine learning algorithm or dataset can be used as a part of a larger machine learning algorithm or dataset. For clarity of doubt, any machine learning algorithm trained against a dataset built using the ambiguity resolution methods described herein is an implementation of the ambiguity resolution methods.

It will be appreciated by a person skilled in the art that numerous variations and/or modifications may be made to the present invention as shown in the specific embodiments as broadly described. The present embodiments are, therefore, to be considered in all respects illustrative and not restrictive.

**Claims**

1. A computer-implemented method for ambiguity resolution in instruction statement interpretation wherein the instruction statement is one of one or more processor executable instruction statements within an instruction set, the method for ambiguity resolution in instruction statement interpretation comprising:

   receiving a user input comprising an instruction set;
   determining an instruction statement of the instruction set has ambiguity in instruction statement interpretation in response to determining that the instruction statement has a plurality of possible interpretations;
   automatically resolving (102) by a processor (1004) without user intervention the ambiguity based on one or more criteria for instruction statement interpretation; and
   thereafter executing the instruction statement of the instruction set,
   wherein the step of automatically resolving the ambiguity comprises:

      scoring the plurality of possible interpretations of the instruction statement by determining a score for each of the plurality of possible interpretations of the instruction statement based on the one or more criteria;
      ranking the scoring of the plurality of possible interpretations based on the score; and
      automatically resolving the ambiguity in response to the ranking by automatically selecting an interpretation among the plurality of possible interpretations based on the ranking of the scoring;
      displaying the selected interpretation of the instruction statement;

   wherein determining the score for each of the plurality of possible interpretations of the instruction statement based on the one or more criteria comprises determining the score in response to a proximity of the one of the plurality of possible interpretations of the instruction statement to one or more selected interpretations of one or more previous instruction statements and determining the score in response to a validity of the possible interpretation of the instruction statement and/or determining the score in response to a validity of a keyword, a phrase or their variants of the instruction statement and/or determining the score in response to a validity of a context of the instruction statement and/or determining the score in response to a proximity of the interpretation of the instructions statement to one or more related elements and/or determining the score in response to a similarity and/or a proximity of the interpretation of the instructions statement to a provided image and/or determining the score in response to one or more instruction statement modifiers, and
   wherein the step of scoring the plurality of possible interpretations of the instruction statement based on the one or more criteria comprises, for each one of the plurality of possible interpretations of the instruction statement, determining a score in response to a proximity of the one of the plurality of possible interpretations of the instruction statement to one or more selected interpretations of one or more previous instruction statements, and wherein the proximity of the one of the plurality of possible interpretations of the instruction statement to one or more selected interpretations of the one or more previous instruction statements comprises a logic hierarchy distance between the one of the plurality of possible interpretations of the instruction statement and each of the one or more selected interpretations of the one or more previous instruction statements.

2. The method according to claim 1, wherein the step of determining the score for each of the plurality of possible interpretations of the instruction statement based on the one or more criteria further comprises:
for at least one of the plurality of possible interpretations of the instruction statement, factoring in an instruction statement specific parameter, wherein the instruction statement specific parameter is a predefined scoring applicable to the at least one of the plurality of possible interpretations of the instruction statement.

3. The method according to claim 1, wherein the one or more instruction statement modifiers include one or more additional keywords provided to adjust the scoring.

4. The method according to any one of claims 1 to 3, wherein the ambiguity resolution is performed in a scripted user interface interaction.

5. The method according to any one of claims 1 to 4, wherein the step of scoring the plurality of possible interpretations of the instruction statement further comprises:

   assigning weightages respectively corresponding to each criterion of the one or more criteria, and
   scoring a total score for each of the plurality of possible interpretations of the instruction statement based on a calculation of the weightages with the corresponding one or more criteria.

6. The method according to claim 5, wherein the step of ranking the scoring of the plurality of possible interpretations of the instruction statement further comprises:
   ranking the total scores of the plurality of possible interpretations of the instruction statement.

7. A system for ambiguity resolution in instruction statement interpretation wherein the instruction statement is one of one or more processor executable instruction statements within an instruction set, the system for ambiguity resolution in instruction statement interpretation comprising:

   at least one processor (1004) configured to receive a user input comprising an instruction set; and
   at least one memory including computer program code, wherein the at least one memory and the computer program code are configured to, with the at least one processor, cause the system at least to automatically resolve (102) ambiguity in interpretation of an instruction statement of the instruction set based on one or more criteria for instruction statement interpretation by:

      determining the instruction statement has ambiguity in instruction statement interpretation in response to determining that the instruction statement has a plurality of possible interpretations;
      scoring the plurality of possible interpretations of the instruction statement by determining a score for each of the plurality of possible interpretations of the instruction statement based on the one or more criteria;
      ranking the scoring of the plurality of possible interpretations based on the score;
      automatically resolving the ambiguity in response to the ranking by automatically selecting an interpretation among the plurality of possible interpretations based on the ranking;
      executing the instruction statement of the instruction set; and
      displaying the selected interpretation of the instruction statement;
      wherein the system is caused to determine the score for each of the plurality of possible interpretations of the instruction statement based on the one or more criteria by determining a proximity of the one of the plurality of possible interpretations of the instruction statement to one or more selected interpretations of one or more previous instruction statements and determine the score in response to a validity of the possible interpretation of the instruction statement and/or determine the score in response to a validity of a keyword, a phrase or their variants of the instruction statement and/or determine the score in response to a validity of a context of the instruction statement and/or determine the score in response to a proximity of the possible interpretation of the instruction statement to one or more related elements and/or determine the score in response to a similarity and/or a proximity of the possible interpretation of the instructions statement to a provided image and/or determine the score in response to one or more instruction statement modifiers, and wherein during the step of scoring the plurality of possible interpretations of the instruction statement based on the one or more criteria, the system is caused to, for each of the plurality of possible interpretations of the instruction statement, determine a score in response to a proximity of the one of the plurality of possible interpretations of the instruction statement to one or more selected interpretations of one or more previous instruction statements, and
      wherein the proximity of the one of the plurality of possible interpretations of the instruction statement to one or more selected interpretations of the one or more previous instruction statements comprises a logic

**EP 3 596 623 B1**

hierarchy distance between the one of the plurality of possible interpretations of the instruction statement and each of the one or more selected interpretations of the plurality of the one or more previous instruction statements.

8. The system according to claim 7, wherein during determining the score for each of the plurality of possible interpretations of the instruction statement based on the one or more criteria, the system is further caused to:
for at least one of the plurality of possible interpretations of the instruction statement, factor in an instruction statement specific parameter, wherein the instruction statement specific parameter is a predefined scoring applicable to the at least one of the plurality of possible interpretations of the instruction statement.

9. The system according to claim 7, wherein the one or more instruction statement modifiers include one or more additional keywords provided to adjust the scoring.

10. The system according to any one of claims 7 to 9, wherein the ambiguity resolution is performed in a scripted user interface interaction.

11. The system according to any one of claims 7 to 10, wherein during the step of scoring the plurality of possible interpretations of the instruction statement, the system is further caused to:

assign weightages corresponding to each criterion of the one or more criteria, and
score a total score for each of the plurality of possible interpretations of the instruction statement based on a calculation of the weightages with the corresponding one or more criteria.

12. The system according to claim 11, wherein during the step of ranking the scoring of the plurality of possible interpretations of the instruction statement, the system is further caused to:
rank the total scores of the plurality of possible interpretations of the instruction statement.

13. A computer readable medium comprising instructions which, when executed by a processor, make the processor perform a method according to any one of claims 1 to 6 for ambiguity resolution in instruction statement interpretation.

**Patentansprüche**

1. Computer-implementiertes Verfahren zur Ambiguitätsauflösung bei der Befehlsanweisungsauslegung, wobei die Befehlsanweisung eine oder mehrere durch einen Prozessor ausführbare Befehlsanweisungen innerhalb eines Befehlssatzes ist, wobei das Verfahren zur Ambiguitätsauflösung bei der Befehlsanweisungsauslegung Folgendes umfasst:

Empfangen einer Benutzereingabe, die einen Befehlssatz umfasst;
Bestimmen, dass eine Befehlsanweisung des Befehlssatzes eine Ambiguität bei der Befehlsanweisungsauslegung aufweist, als Reaktion auf die Bestimmung, dass die Befehlsanweisung eine Vielzahl von möglichen Auslegungen hat;
automatisches Auflösen (102) der Ambiguität durch einen Prozessor (1004) ohne Benutzereingriff basierend auf einem oder mehreren Kriterien für die Befehlsanweisungsauslegung; und
anschließend Ausführen der Befehlsanweisung des Befehlssatzes,
wobei der Schritt des automatischen Auflösens der Ambiguität Folgendes umfasst:

Bewerten der Vielzahl von möglichen Auslegungen der Befehlsanweisung durch Bestimmen eines Punktewerts für jede der Vielzahl von möglichen Auslegungen der Befehlsanweisung basierend auf dem einen oder den mehreren Kriterien;
Einstufen der Bewertung der Vielzahl von möglichen Auslegungen basierend auf dem Punktewert; und
automatisches Auflösen der Ambiguität als Reaktion auf die Einstufung durch automatisches Auswählen einer Auslegung aus der Vielzahl von möglichen Auslegungen basierend auf der Einstufung der Bewertung;
Anzeigen der ausgewählten Auslegung der Befehlsanweisung;
wobei das Bestimmen des Punktewerts für jede aus der Vielzahl von möglichen Auslegungen der Befehlsanweisung basierend auf dem einen oder den mehreren Kriterien das Bestimmen des Punktewerts als Reaktion auf eine Proximität der einen der Vielzahl von möglichen Auslegungen der Befehlsanweisung zu einer oder mehreren ausgewählten Auslegungen einer oder mehrerer vorheriger Befehlsanweisungen und das Bestimmen des Punktewerts als Reaktion auf eine Validität der möglichen Auslegung der Befehlsanweisung und/oder das Bestimmen des Punktewerts als Reaktion auf eine Validität eines Schlüsselworts, einer Phrase oder deren Variationen der Befehlsanweisung und/oder das Bestimmen des Punktewerts als Reaktion auf eine Validität eines Kontexts der Befehlsanweisung und/oder das Bestimmen des Punktewerts als Reaktion auf eine Proximität der Auslegung der Befehlsanweisung zu einem oder mehreren zugehörigen Elementen und/oder das Bestimmen des Punktewerts als Reaktion auf eine Ähnlichkeit und/oder eine Proximität der Auslegung der Befehlsanweisung zu einem bereitgestellten Bild und/oder das Bestimmen des Punktewerts als Reaktion auf einen oder mehrere Befehlsanweisungsmodifikatoren umfasst und wobei der Schritt des Bewertens der Vielzahl von möglichen Auslegungen der Befehlsanweisung basierend auf dem einen oder den mehreren Kriterien für jede aus der Vielzahl von möglichen Auslegungen der Befehlsanweisung das Bestimmen eines Punktewerts als Reaktion auf eine Proximität der einen der Vielzahl von möglichen Auslegungen der Befehlsanweisung zu einer oder mehreren ausgewählten Auslegungen einer oder mehrerer vorheriger Befehlsanweisungen umfasst und wobei die Proximität der einen aus der Vielzahl von möglichen Auslegungen der Befehlsanweisung zu einer oder mehreren ausgewählten Auslegungen der einen oder mehreren vorherigen Befehlsanweisungen eine logische Hierarchiedistanz zwischen der einen der Vielzahl von möglichen Auslegungen der Befehlsanweisung und jeder aus der einen oder den mehreren ausgewählten Auslegungen der einen oder mehreren vorherigen Befehlsanweisungen umfasst.

2. Verfahren nach Anspruch 1, wobei der Schritt des Bestimmens des Punktewerts für jede der Vielzahl von möglichen Auslegungen der Befehlsanweisung basierend auf dem einen oder den mehreren Kriterien weiters Folgendes umfasst:
für zumindest eine der Vielzahl von möglichen Auslegungen der Befehlsanweisung, Faktorisierung in einen befehlsanweisungsspezifischen Parameter, wobei der befehlsanweisungsspezifische Parameter eine vordefinierte Bewertung ist, die auf zumindest eine der Vielzahl von möglichen Auslegungen der Befehlsanweisung anwendbar ist.

3. Verfahren nach Anspruch 1, wobei der eine oder die mehreren Befehlsanweisungsmodifikatoren ein oder mehrere zusätzliche Schlüsselwörter umfassen, die bereitgestellt sind, um die Bewertung anzupassen.

4. Verfahren nach einem der Ansprüche 1 bis 3, wobei die Ambiguitätsauflösung in einer Benutzerschnittstelleninteraktion mit Skript ausgeführt wird.

5. Verfahren nach einem der Ansprüche 1 bis 4, wobei der Schritt des Bewertens der Vielzahl von möglichen Auslegungen der Befehlsanweisung weiters Folgendes umfasst:

Zuordnen von Gewichtungen, die jeweils einem Kriterium des einen oder der mehreren Kriterien entsprechen, und
Bewerten des Gesamtpunktewerts für jede aus der Vielzahl von möglichen Auslegungen der Befehlsanweisung basierend auf einer Berechnung der Gewichtungen mit dem/den entsprechenden einen oder mehreren Kriterien.

6. Verfahren nach Anspruch 5, wobei der Schritt des Einstufens der Bewertung der Vielzahl von möglichen Auslegungen der Befehlsanweisung weiters Folgendes umfasst:
Einstufen des Gesamtpunktewerts der Vielzahl von möglichen Auslegungen der Befehlsanweisung.

7. System zur Ambiguitätsauflösung bei der Befehlsanweisungsauslegung, wobei die Befehlsanweisung eine oder mehrere durch einen Prozessor ausführbare Befehlsanweisungen innerhalb eines Befehlssatzes ist, wobei das System zur Ambiguitätsauflösung bei der Befehlsanweisungsauslegung Folgendes umfasst:

zumindest einen Prozessor (1004), der ausgelegt ist, um eine Benutzereingabe zu empfangen, die einen Befehlssatz umfasst; und
zumindest einen Speicher, der einen Computerprogrammcode umfasst, wobei der zumindest eine Speicher und der Computerprogrammcode ausgelegt sind, um mit dem zumindest einen Prozessor zu bewirken, dass das System zumindest eine Ambiguität bei der Auslegung einer Befehlsanweisung des Befehlssatzes basierend auf einem oder mehreren Kriterien zur Befehlsanweisungsauslegung durch Folgendes automatisch auflöst (102):

Bestimmen, dass die Befehlsanweisung eine Ambiguität bei der Befehlsanweisungsauslegung aufweist, als Reaktion auf die Bestimmung, dass die Befehlsanweisung eine Vielzahl von möglichen Auslegungen hat;

Bewerten der Vielzahl von möglichen Auslegungen der Befehlsanweisung durch Bestimmen eines Punktewerts für jede der Vielzahl von möglichen Auslegungen der Befehlsanweisung basierend auf dem einen oder den mehreren Kriterien;

Einstufen der Bewertung der Vielzahl von möglichen Auslegungen basierend auf dem Punktewert; und automatisches Auflösen der Ambiguität als Reaktion auf die Einstufung durch automatisches Auswählen einer Auslegung aus der Vielzahl von möglichen Auslegungen basierend auf der Einstufung des Punktewerts;

Ausführen der Befehlsanweisung des Befehlssatzes; und

Anzeigen der ausgewählten Auslegung der Befehlsanweisung;

wobei bewirkt wird, dass das System den Punktewert für jede aus der Vielzahl von möglichen Auslegungen der Befehlsanweisung basierend auf dem einen oder den mehreren Kriterien bestimmt, indem es eine Proximität der einen aus der Vielzahl von möglichen Auslegungen der Befehlsanweisung zu einer oder mehreren ausgewählten Auslegungen einer oder mehrerer vorheriger Befehlsanweisungen bestimmt und den Punktewert als Reaktion auf eine Validität der möglichen Auslegung der Befehlsanweisung bestimmt und/oder den Punktewert als Reaktion auf eine Validität eines Schlüsselworts, einer Phrase oder deren Variationen der Befehlsanweisung bestimmt und/oder den Punktewert als Reaktion auf eine Validität eines Kontexts der Befehlsanweisung bestimmt und/oder den Punktewert als Reaktion auf eine Proximität der Auslegung der Befehlsanweisung zu einem oder mehreren zugehörigen Elementen bestimmt und/oder den Punktewert als Reaktion auf eine Ähnlichkeit und/oder eine Proximität der Auslegung der Befehlsanweisung zu einem bereitgestellten Bild bestimmt und/oder den Punktewert als Reaktion auf einen oder mehrere Befehlsanweisungsmodifikatoren bestimmt, und

wobei während des Schritts des Bewertens der Vielzahl von möglichen Auslegungen der Befehlsanweisung basierend auf dem einen oder den mehreren Kriterien bewirkt wird, dass das System für jede aus der Vielzahl von möglichen Auslegungen der Befehlsanweisung einen Punktewert als Reaktion auf eine Proximität der einen der Vielzahl von möglichen Auslegungen der Befehlsanweisung zu einer oder mehreren ausgewählten Auslegungen einer oder mehrerer vorheriger Befehlsanweisungen bestimmt, und

wobei die Proximität der einen aus der Vielzahl von möglichen Auslegungen der Befehlsanweisung zu einer oder mehreren ausgewählten Auslegungen der einen oder mehreren vorherigen Befehlsanweisungen eine logische Hierarchiedistanz zwischen der einen der Vielzahl von möglichen Auslegungen der Befehlsanweisung und jeder aus der einen oder den mehreren ausgewählten Auslegungen der einen oder mehreren vorherigen Befehlsanweisungen umfasst.

8. System nach Anspruch 7, wobei während des Bestimmens des Punktewerts für jede der Vielzahl von möglichen Auslegungen der Befehlsanweisung basierend auf dem einen oder den mehreren Kriterien, außerdem bewirkt wird, dass das System:

für zumindest eine aus der Vielzahl von möglichen Auslegungen der Befehlsanweisung, in einen befehlsanweisungsspezifischen Parameter faktorisiert, wobei der befehlsanweisungsspezifische Parameter eine vordefinierte Bewertung ist, die auf zumindest eine der Vielzahl von möglichen Auslegungen der Befehlsanweisung anwendbar ist.

9. System nach Anspruch 7, wobei der eine oder die mehreren Befehlsanweisungsmodifikatoren ein oder mehrere zusätzliche Schlüsselwörter umfassen, die bereitgestellt sind, um die Bewertung anzupassen.

10. System nach einem der Ansprüche 7 bis 9, wobei die Ambiguitätsauflösung in einer Benutzerschnittstelleninteraktion mit Skript ausgeführt wird.

11. System nach einem der Ansprüche 7 bis 10, wobei der Schritt des Bewertens der Vielzahl von möglichen Auslegungen der Befehlsanweisung weiters Folgendes umfasst:

Zuordnen von Gewichtungen, die jeweils einem Kriterium des einen oder der mehreren Kriterien entsprechen, und

Bewerten des Gesamtpunktewerts für jede aus der Vielzahl von möglichen Auslegungen der Befehlsanweisung basierend auf einer Berechnung der Gewichtungen mit dem/den entsprechenden einen oder mehreren Kriterien.

12. Verfahren nach Anspruch 11, wobei der Schritt des Einstufens der Punktewertung der Vielzahl von möglichen Auslegungen der Befehlsanweisung weiters Folgendes umfasst:

Einstufen der Gesamtpunktewerte der Vielzahl von möglichen Auslegungen der Befehlsanweisung.

13. Computerlesbares Medium, das Befehle umfasst, die bei Ausführung durch einen Prozessor bewirken, dass der Prozessor ein Verfahren nach einem der Ansprüche 1 bis 6 zur Ambiguitätsauflösung bei der Befehlsanweisungsauslegung ausführt.

**Revendications**

1. Procédé mis en oeuvre par ordinateur pour une résolution d'ambiguïté dans une interprétation d'énoncé d'instruction, dans lequel l'énoncé d'instruction est l'un parmi un ou plusieurs énoncés d'instructions exécutables par processeur dans un ensemble d'instructions, le procédé pour la résolution d'ambiguïté dans l'interprétation d'énoncé d'instruction comprenant les étapes ci-dessous consistant à :

   recevoir une entrée utilisateur comprenant un ensemble d'instructions ;
   déterminer qu'un énoncé d'instruction de l'ensemble d'instructions présente une ambiguïté dans l'interprétation d'énoncé d'instruction en réponse à une détermination selon laquelle l'énoncé d'instruction présente une pluralité d'interprétations possibles ;
   résoudre automatiquement (102), par le biais d'un processeur (1004), sans intervention de l'utilisateur, l'ambiguïté, sur la base d'un ou plusieurs critères d'interprétation d'énoncé d'instruction ; et
   exécuter par la suite l'énoncé d'instruction de l'ensemble d'instructions, dans lequel l'étape de résolution automatique de l'ambiguïté comprend les étapes ci-dessous consistant à :

      noter la pluralité d'interprétations possibles de l'énoncé d'instruction en déterminant un score pour chacune de la pluralité d'interprétations possibles de l'énoncé d'instruction sur la base dudit un ou desdits plusieurs critères ;
      classer la notation de la pluralité d'interprétations possibles sur la base du score ; et
      résoudre automatiquement l'ambiguïté en réponse au classement, en sélectionnant automatiquement une interprétation parmi la pluralité d'interprétations possibles sur la base du classement de la notation ;
      afficher l'interprétation sélectionnée de l'énoncé d'instruction ;

   dans lequel l'étape de détermination du score pour chacune de la pluralité d'interprétations possibles de l'énoncé d'instruction sur la base dudit un ou desdits plusieurs critères consiste à déterminer le score en réponse à la proximité de ladite une interprétation de la pluralité d'interprétations possibles de l'énoncé d'instruction par rapport à une ou plusieurs interprétations sélectionnées d'un ou plusieurs énoncés d'instructions précédents et à déterminer le score en réponse à la validité de l'interprétation possible de l'énoncé d'instruction et/ou à déterminer le score en réponse à la validité d'un mot-clé, d'une phrase ou de leurs variantes de l'énoncé d'instruction et/ou à déterminer le score en réponse à la validité d'un contexte de l'énoncé d'instruction et/ou à déterminer le score en réponse à la proximité de l'interprétation de l'énoncé d'instruction par rapport à un ou plusieurs éléments connexes et/ou à déterminer le score en réponse à la similarité et/ou à la proximité de l'interprétation de l'énoncé d'instruction par rapport à une image fournie et/ou à déterminer le score en réponse à un ou plusieurs modificateurs d'énoncé d'instruction ; et
   dans lequel l'étape de notation de la pluralité d'interprétations possibles de l'énoncé d'instruction sur la base dudit un ou desdits plusieurs critères comprend, pour chacune de la pluralité d'interprétations possibles de l'énoncé d'instruction, l'étape consistant à déterminer un score en réponse à la proximité de ladite une interprétation de la pluralité d'interprétations possibles de l'énoncé d'instruction par rapport à une ou plusieurs interprétations sélectionnées d'un ou plusieurs énoncés d'instructions précédents ; et
   dans lequel la proximité de ladite une interprétation de la pluralité d'interprétations possibles de l'énoncé d'instruction par rapport à une ou plusieurs interprétations sélectionnées dudit un ou desdits plusieurs énoncés d'instructions précédents comprend une distance hiérarchique logique entre ladite une interprétation de la pluralité d'interprétations possibles de l'énoncé d'instruction et chaque interprétation de ladite une ou desdites plusieurs interprétations sélectionnées dudit un ou desdits plusieurs énoncés d'instructions précédents.

2. Procédé selon la revendication 1, dans lequel l'étape de détermination du score pour chacune de la pluralité d'interprétations possibles de l'énoncé d'instruction, sur la base dudit un ou desdits plusieurs critères, comprend en outre l'étape ci-dessous consistant à :
   pour au moins une interprétation de la pluralité d'interprétations possibles de l'énoncé d'instruction, prendre en compte un paramètre spécifique à un énoncé d'instruction, dans lequel le paramètre spécifique à un énoncé d'instruction est une notation prédéfinie applicable à ladite au moins une interprétation de la pluralité d'interprétations possibles de l'énoncé d'instruction.

**3.** Procédé selon la revendication 1, dans lequel ledit un ou lesdits plusieurs modificateurs d'énoncé d'instruction incluent un ou plusieurs mots-clés supplémentaires fournis pour ajuster la notation.

**4.** Procédé selon l'une quelconque des revendications 1 à 3, dans lequel la résolution d'ambiguïté est mise en oeuvre dans le cadre d'une interaction d'interface utilisateur scénarisée.

**5.** Procédé selon l'une quelconque des revendications 1 à 4, dans lequel l'étape de notation de la pluralité d'interprétations possibles de l'énoncé d'instruction comprend en outre les étapes ci-dessous consistant à :

affecter des pondérations correspondant respectivement à chaque critère dudit un ou desdits plusieurs critères ; et

noter un score total pour chacune de la pluralité d'interprétations possibles de l'énoncé d'instruction, sur la base d'un calcul des pondérations avec ledit un ou lesdits plusieurs critères correspondants.

**6.** Procédé selon la revendication 5, dans lequel l'étape de classement de la notation de la pluralité d'interprétations possibles de l'énoncé d'instruction comprend en outre l'étape ci-dessous consistant à :
classer les scores totaux de la pluralité d'interprétations possibles de l'énoncé d'instruction.

**7.** Système pour une résolution d'ambiguïté dans une interprétation d'énoncé d'instruction, dans lequel l'énoncé d'instruction est l'un parmi un ou plusieurs énoncés d'instructions exécutables par processeur dans un ensemble d'instructions, le système pour une résolution d'ambiguïté dans l'interprétation d'énoncé d'instruction comprenant :

au moins un processeur (1004) configuré de manière à recevoir une entrée utilisateur comprenant un ensemble d'instructions ; et
au moins une mémoire incluant un code de programme informatique, dans laquelle ladite au moins une mémoire et le code de programme informatique sont configurés de manière à, conjointement avec ledit au moins un processeur, amener le système à résoudre automatiquement (102) une ambiguïté dans l'interprétation d'un énoncé d'instruction de l'ensemble d'instructions sur la base d'un ou plusieurs critères pour l'interprétation d'énoncé d'instruction, en mettant en oeuvre les étapes ci-dessous consistant à :

déterminer que l'énoncé d'instruction présente une ambiguïté dans l'interprétation d'énoncé d'instruction en réponse à une détermination selon laquelle l'énoncé d'instruction présente une pluralité d'interprétations possibles ;
noter la pluralité d'interprétations possibles de l'énoncé d'instruction en déterminant un score pour chacune de la pluralité d'interprétations possibles de l'énoncé d'instruction sur la base dudit un ou desdits plusieurs critères ;
classer la notation de la pluralité d'interprétations possibles sur la base du score ;
résoudre automatiquement l'ambiguïté en réponse au classement en sélectionnant automatiquement une interprétation parmi la pluralité d'interprétations possibles sur la base du classement ;
exécuter l'énoncé d'instruction de l'ensemble d'instructions ; et
afficher l'interprétation sélectionnée de l'énoncé d'instruction ;
dans lequel le système est amené à déterminer le score pour chacune de la pluralité d'interprétations possibles de l'énoncé d'instruction sur la base dudit un ou desdits plusieurs critères en mettant en oeuvre l'étape consistant à déterminer la proximité de ladite une interprétation de la pluralité d'interprétations possibles de l'énoncé d'instruction par rapport à une ou plusieurs interprétations sélectionnées d'un ou plusieurs énoncés d'instructions précédents et à déterminer le score en réponse à la validité de l'interprétation possible de l'énoncé d'instruction et/ou à déterminer le score en réponse à la validité d'un mot-clé, d'une phrase ou de leurs variantes de l'énoncé d'instruction et/ou à déterminer le score en réponse à la validité d'un contexte de l'énoncé d'instruction et/ou à déterminer le score en réponse à la proximité de l'interprétation possible de l'énoncé d'instruction par rapport à un ou plusieurs éléments connexes et/ou à déterminer le score en réponse à la similarité et/ou à la proximité de l'interprétation possible de l'énoncé d'instruction par rapport à une image fournie et/ou à déterminer le score en réponse à un ou plusieurs modificateurs d'énoncé d'instruction ; et
dans lequel, au cours de l'étape de notation de la pluralité d'interprétations possibles de l'énoncé d'instruction sur la base dudit un ou desdits plusieurs critères, le système est amené, pour chacune de la pluralité d'interprétations possibles de l'énoncé d'instruction, à déterminer un score en réponse à la proximité de ladite une interprétation de la pluralité d'interprétations possibles de l'énoncé d'instruction par rapport à une ou plusieurs interprétations sélectionnées d'un ou plusieurs énoncés d'instructions précédents ; et

dans lequel la proximité de ladite une interprétation de la pluralité d'interprétations possibles de l'énoncé d'instruction par rapport à une ou plusieurs interprétations sélectionnées dudit un ou desdits plusieurs énoncés d'instructions précédents comprend une distance hiérarchique logique entre ladite une interprétation de la pluralité d'interprétations possibles de l'énoncé d'instruction et chaque interprétation de ladite une ou desdites plusieurs interprétations sélectionnées dudit un ou desdits plusieurs énoncés d'instructions précédents.

8. Système selon la revendication 7, dans lequel, lors de l'étape de détermination du score pour chacune de la pluralité d'interprétations possibles de l'énoncé d'instruction sur la base dudit un ou desdits plusieurs critères, le système est en outre amené à :
pour au moins une interprétation de la pluralité d'interprétations possibles de l'énoncé d'instruction, prendre en compte un paramètre spécifique à un énoncé d'instruction, dans lequel le paramètre spécifique à un énoncé d'instruction est une notation prédéfinie applicable à ladite au moins une interprétation de la pluralité d'interprétations possibles de l'énoncé d'instruction.

9. Système selon la revendication 7, dans lequel ledit un ou lesdits plusieurs modificateurs d'énoncé d'instruction incluent un ou plusieurs mots-clés supplémentaires fournis pour ajuster la notation.

10. Système selon l'une quelconque des revendications 7 à 9, dans lequel la résolution d'ambiguïté est mise en oeuvre dans le cadre d'une interaction d'interface utilisateur scénarisée.

11. Système selon l'une quelconque des revendications 7 à 10, dans lequel, au cours de l'étape de notation de la pluralité d'interprétations possibles de l'énoncé d'instruction, le système est en outre amené à :

affecter des pondérations correspondant à chaque critère dudit un ou desdits plusieurs critères ; et
noter un score total pour chacune de la pluralité d'interprétations possibles de l'énoncé d'instruction, sur la base d'un calcul des pondérations avec ledit un ou lesdits plusieurs critères correspondants.

12. Système selon la revendication 11, dans lequel, au cours de l'étape de classement de la notation de la pluralité d'interprétations possibles de l'énoncé d'instruction, le système est en outre amené à :
classer les scores totaux de la pluralité d'interprétations possibles de l'énoncé d'instruction.

13. Support lisible par ordinateur comprenant des instructions qui, lorsqu'elles sont exécutées par un processeur, amènent le processeur à mettre en oeuvre un procédé selon l'une quelconque des revendications 1 à 6 pour une résolution d'ambiguïté dans une interprétation d'énoncé d'instruction.

102

resolving ambiguity in interpreting an instruction statement of an instruction set based on one or more criteria

100

**Fig. 1**

Fig. 2

200

**Fig. 3**

300

Fig. 4

Fig. 5

500

Fig. 7

Fig. 8

800

**Fig. 9**

900

START

Using Instruction Statement Interpretation

Scoring of Instruction Statement Interpretation

Calculate Score

Proximity to Previous Selected Interpretation

Validity of Interpretation

Validity of Keywords, phrases, or its variants

Proximity and validity, respective to predefined context

Proximity to related interpretations

Proximity and similarity to provided image

Instruction statements modifiers

Statement or interpretation specific custom scoring

Combine weighted score

END

**Fig. 10**

**EP 3 596 623 B1**

**Patent documents cited in the description**

- SG 10201702206S
- US 20130227351 A1, Lau